# EUROPÄISCHE PATENTSCHRIFT

(11) **EP 3 484 897 B1**
(45) Veröffentlichungstag und Bekanntmachung des Hinweises auf die Patenterteilung: **23.12.2020**
(21) Anmeldenummer: 17736975.8
(22) Anmeldetag: 13.07.2017
(51) Int. Cl.: C07F 7/18, C08G 77/16, C08L 83/04

(54) **HÄRTER FÜR SILIKONKAUTSCHUKMASSEN**
HARDENER FOR SILICONE RUBBER MASSES
DURCISSEUR POUR MASSES EN CAOUTCHOUC SILICONE

(30) Priorität: 13.07.2016 EP 16179306
(43) Veröffentlichungstag der Anmeldung: 22.05.2019
(73) Patentinhaber: Nitrochemie Aschau GmbH, 84544 Aschau am Inn (DE)
(72) Erfinder: LANGERBEINS, Klaus, 84544 Aschau am Inn (DE); PICHL, Ulrich, 84544 Aschau am Inn (DE); KRUPP, Alexis, 84544 Aschau am Inn (DE); SCHMIDT, Gerhard, 84544 Aschau am Inn (DE)
(74) Vertreter: Müller Schupfner & Partner Patent- und Rechtsanwaltspartnerschaft mbB
(86) Internationale Anmeldenummer: PCT/EP2017/067742
(87) Internationale Veröffentlichungsnummer: WO 2018/011361

(56) Entgegenhaltungen:
- EP-A1- 0 089 618
- WO-A1-2016/146685
- DE-B- 1 288 314
- US-A- 4 636 573

## Beschreibung

Die Erfindung betrifft einen Härter für Silikonkautschukmassen enthaltend eine Verbindung mit der allgemeinen Strukturformel R¹ₘSi(R)₄₋ₘ, ein Verfahren zu dessen Herstellung und die Verwendung dieses Härters zum Härten einer Silikonkautschukmasse. Die Erfindung betrifft ferner eine Zusammensetzung enthaltend den Härter für Silikonkautschukmassen und die Verwendung einer solchen Zusammensetzung als Dichtungsmittel, Klebstoff, Vergussmasse oder Beschichtungsmittel.

Kalthärtende Silikonkautschukmassen, auch RTV-(Raumtemperaturvernetzende)-Silikonkautschukmassen genannt, sind als maßgeschneiderte Werkstoffe mit elastischen Eigenschaften bekannt. Sie finden breite Anwendung als Dichtstoffe, als Fugenmaterial oder als Klebstoffe für Glas, Porzellan, Keramik, Stein, Kunststoffe, Metalle, Holz etc., vor allem im Sanitärbereich, im Hochbau oder als Beschichtungsmaterialien. Bevorzugt kommen kalthärtende Silikonkautschukmassen als Einkomponenten-RTV-Siliconkautschukmassen (RTV-1) zum Einsatz. Derartige Silikonkautschukmassen sind üblicherweise plastisch verformbare Mischungen aus Polyorganosiloxanen mit funktionellen Gruppen und geeigneten Vernetzungsmitteln, insbesondere geeigneten Härtern, die unter Feuchtigkeitsausschluss aufbewahrt werden. Diese Mischungen vernetzen unter dem Einfluss von Wasser oder Luftfeuchtigkeit bei Raumtemperatur. Dieser Vorgang wird üblicherweise auch als Aushärten bezeichnet. Die dabei eingesetzten Härter werden häufig auch als Vernetzer bezeichnet.

Die Eigenschaften der ausgehärteten Silikonkautschukmassen werden dabei maßgeblich durch die verwendeten Polyorganosiloxane und die verwendeten Härter bestimmt. Beispielsweise kann in Abhängigkeit der Verwendung von tri- und/oder tetrafunktionalen Härtern der Vernetzungsgrad der ausgehärteten Silikonkautschukmasse gesteuert werden. Der Vernetzungsgrad hat einen erheblichen Einfluss auf z.B. die Lösemittelresistenz der ausgehärteten Silikonkautschukmasse. Auch die verwendeten Polyorganosiloxane haben einen Einfluss auf den Vernetzungsgrad, insbesondere über die Anzahl der funktionellen Gruppen, die sie tragen. Besonders häufig werden jedoch alpha,omega-Dihydroxypolyorganosiloxane eingesetzt.

Beim Aushärten verknüpfen sich die Polyorganosiloxane mit den Härtern. Im Zuge des Aushärtens werden am Härter befindliche, geeignete Abgangsgruppen vom Härter abgespalten. Die Verknüpfung mit den Polyorganosiloxanen erfolgt über die funktionellen Gruppen der Polyorganosiloxane, insbesondere über deren OH-Gruppen. Anhand der freigesetzten Abgangsgruppen, die die Härter tragen, werden zwischen sauren (Säuren als Abgangsgruppe, wie z.B. Essigsäure), basischen (Amine als Abgangsgruppen) und neutralen (Alkohole oder Oxime als Abgangsgruppen) Härtern bzw. RTV-1-Systemen unterschieden.

Aufgrund der von sauren und basischen RTV-1-Kautschukmassen bei der Vernetzung freigesetzten aggressiven Verbindungen, die unter anderem Metalle, Stein oder Mörtel schädigen können, werden heutzutage bevorzugt RTV-1-Kautschukmassen eingesetzt, die bei der Vernetzung neutrale Abgangsgruppen freisetzen, also neutralvernetzend sind. Besonders häufig wird dabei auf Härter auf Alkoxysilan-Basis zurückgegriffen, die beispielsweise Ethanol oder Methanol als Abgangsgruppen aufweisen. RTV-1-Systeme mit Alkoxyvernetzern weisen jedoch häufig Probleme bei der Lagerstabilität sowie bezüglich der Haftung der ausgehärteten Silikonkautschukmasse auf. Ebenfalls werden häufig Härter auf Oxim-Basis eingesetzt, die unter Abgabe eines Oxims, z.B. eines Alkanonoxims wie Butan-2-onoxim hydrolysieren. Nachteilig an den Härtern auf Oxim-Basis ist, dass sie negative toxikologische Eigenschaften aufweisen können. Insbesondere steht Butan-2-onoxim nach neueren Erkenntnissen im Verdacht, Krebs erzeugen zu können.

Ferner weisen praktisch alle angeführten, üblicherweise verwendeten Härter den Nachteil auf, dass von den entsprechenden RTV-1-Systeme beim Aushärten eine erhebliche Geruchsbelastung ausgeht. Diese Geruchsbelastung kann teilweise auch gesundheitliche Nachteile nach sich ziehen. Insbesondere bei der Verwendung der entsprechenden RTV-1-Systeme in geschlossenen Räumen ergibt sich eine starke Belastung der Anwender durch die mitunter übel riechenden Abgangsgruppen.

In der US 4 636 573 A sind spezifische, sterisch gehinderte aromatische Silikonester beschrieben, die als Stabilisatoren eingesetzt werden.

Die DE 12 88 314 B beschreibt Silikone zum Stabilisieren von organischen Polymeren, wobei die Reste der Silikone unter anderem Alkyl- und Arylester der Salicylsäure sein können.

In der EP 0 089 618 A1 sind Silane beschrieben, die als Härter für Silikonkautschukmassen dienen können, wobei Reste von α-Hydroxycarbonsäureestern in den Silanen enthalten sind.

Weiterhin sind im Stand der Technik Vernetzer bekannt, die Abgangsgruppen auf Basis von Glykolsäure und Milchsäure aufweisen.

Die US 4 552 942 beschreibt Silane, die am Siliciumatom mindestens drei Glykolsäureester oder Milchsäureester als Abgangsgruppen aufweisen. Diese können in Zusammensetzungen mit Diorganopolysiloxanen und anderen Substanzen wie Katalysatoren eingesetzt werden.

Die EP 2 030 976 beschreibt Mischungen von zwei verschiedenen Silanen als Härter für Silikonkautschukmassen, wobei die Silane jeweils 2-Hydroxypropionsäurealkylester als Abgangsgruppen aufweisen.

Nachteilig an den oben beschriebenen Härtern ist, dass sie teilweise einen unangenehmen Geruch aufweisen und dass mit den Härtern vernetzte Silikonkautschukmassen mitunter unbefriedigende mechanische Eigenschaften zeigen. Ferner hat sich herausgestellt, dass Silikonkautschukmassen mit den üblicherweise darin vorhandenen Stoffen, vor allem bei erhöhter Temperatur, eine unbefriedigende Lagerstabilität aufweisen können.

Weiterhin sollte der eingesetzte Härter dazu führen, dass die Silikonkautschukmasse nach Aushärtung gute mechanische Eigenschaften aufweist.

Auch ist es wünschenswert, dass das Polymerisationsprodukt nach abgeschlossener Härtung der Silikonkautschukmasse transparent bzw. klar ist.

Aufgabe der Erfindung ist es somit, einen Härter für Silikonkautschukmassen bereit zu stellen, der zumindest einige der Nachteile der im Stand der Technik bekannten Härter beseitigt oder zumindest reduziert und/oder befriedigende Eigenschaften aufweist.

Diese Aufgabe wird durch den in Anspruch 1, 16, 17,18 und 26 angegebenen Härter, das in Anspruch 20 angegebene Verfahren, die in Anspruch 27 angegebene Verwendung, die in Anspruch 29 bis 31 angegebenen Zusammensetzungen und die in Anspruch 32 angegebene Verwendung gelöst.

Vorteilhafte Ausgestaltungen der Erfindung sind in den abhängigen Ansprüchen angegeben und werden nachfolgend im Einzelnen erläutert.

In der erfindungsgemäßen Verwendung eines Härters für Silikonkautschukmassen enthält der Härter eine Verbindung mit der allgemeinen Strukturformel R¹ₘSi(R)₄₋ₘ,
wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
R ein Hydroxycarbonsäureesterrest mit der allgemeinen Strukturformel (I): 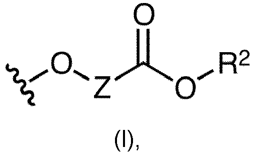 ist,
   wobei
   R² eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
   Z eine optional substituierte aromatische Gruppe mit 4 bis 14 C-Atomen, wobei wenn m = 2, m = 1 oder m = 0 ist, die C6-Arylgruppe nicht 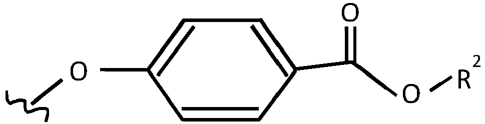 bedeutet
   und wenn m = 2 oder m = 0 und die C6-Arylgruppe 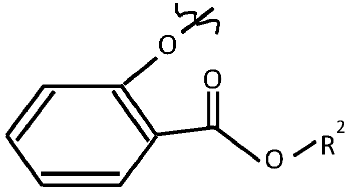 ist, R² nicht Phenyl bedeutet;
   und wenn die C6-Arylgruppe 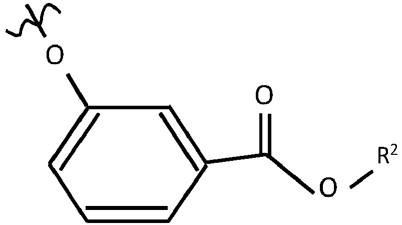 ist, R² nicht Ethyl bedeutet oder -(CR³R⁴)ₙ-, wobei n eine ganze Zahl von 2 bis 10 ist, oder ein optional substituiertes gesättigtes oder teilweise ungesättigtes cyclisches Ringsystem mit 4 bis 14 C-Atomen bedeutet,
   jeder R³ und R⁴ unabhängig voneinander H oder eine optional substituierte, geradkettige oder verzweigte C1- bis C16 Alkylgruppe oder eine C4- bis C14-Arylgruppe bedeuten, und
   n eine ganze Zahl von 2 bis 10 ist
   oder Oligomere oder Polymere des Härters.

Der erfindungsgemäße Härter für Silikonkautschukmassen, enthält eine Verbindung mit der allgemeinen Strukturformel R¹ₘSi(R)₄₋ₘ,
wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet, m eine ganze Zahl von 0 bis 2 ist, wobei
(a) R ein Hydroxycarbonsäureesterrest mit der allgemeinen Strukturformel (II): 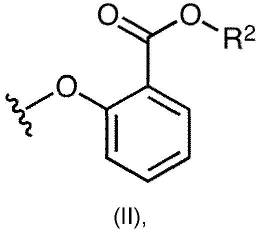 ist
   wobei R² eine optional substituierte, geradkettige oder verzweigte C1- bis C16-Alkylgruppe, eine C4- bis C14-Cycloalkylgruppe oder eine C5- bis C15-Aralkylgruppe bedeutet
   oder Oligomere oder Polymere des Härters, oder
(b) die allgemeine Strukturformel R¹ₘSi(R)₄₋ₘ, 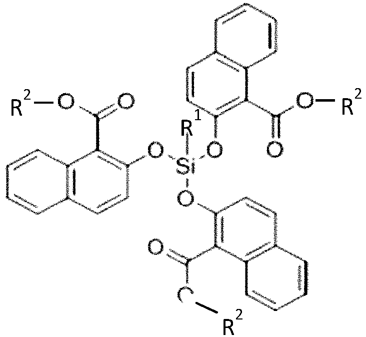 ist,
   oder Oligomere oder Polymere des Härters, worin R² wie oben definiert ist, oder
(c) R ein Hydroxycarbonsäureesterrest mit der allgemeinen Strukturformel (I): 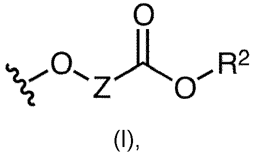 ist,
   wobei
   R² eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
   Z-(CR³R⁴)ₙ- ist, wobei n eine ganze Zahl von 2 bis 10 ist,
      oder
   Z ein optional substituiertes gesättigtes oder teilweise ungesättigtes cyclisches Ringsystem mit 4 bis 14 C-Atomen bedeutet,
   jeder R³ und R⁴ unabhängig voneinander H oder eine optional substituierte, geradkettige oder verzweigte C1- bis C16 Alkylgruppe oder eine C4- bis C14-Arylgruppe bedeuten, und
   n eine ganze Zahl von 2 bis 10 ist
   oder Oligomere oder Polymere des Härters.

Überraschend hat sich gezeigt, dass die Verwendung von erfindungsgemäßen Härtern dazu führt, dass Silikonkautschukmassen, insbesondere Dichtstoffformulierungen, die erfindungsgemäße Härter enthalten eine oder mehrere der folgenden Eigenschaften aufweisen:, farblos und transparent, gute mechanische Eigenschaften, insbesondere eine gute Hautbildungszeit, Klebfreizeit sowie eine gute Reißfestigkeit, einen angenehmen Geruch, bei Lagerung bei erhöhter Temperatur stabil bleiben und sich insbesondere nicht verfärben. Ohne an eine wissenschaftliche Theorie gebunden sein zu wollen, scheint der Effekt der erfindungsgemäßen Härter dabei durch die spezielle Struktur der Härter, insbesondere der Hydroxycarbonsäureesterreste zustande zu kommen, die einerseits eine Stabilisierung der Silikonkautschukmassen, insbesondere der Dichtstoffformulierung, bei Lagerung bei erhöhter Temperatur und andererseits gute mechanische Eigenschaften der ausgehärteten Dichtstoffe zu ermöglichen scheinen.

Der erfindungsgemäße Härter oder Vernetzer für Silikonkautschukmassen ist in der Lage, in Gegenwart von Wasser oder Luftfeuchtigkeit mit di- oder mehr-funktionellen Polyorganosiloxanverbindungen unter Ausbildung von Si-O-Si-Bindungen zu polymerisieren bzw. zu kondensieren. Bevorzugt werden dabei alpha,omega-Dihydroxypolyorganosiloxane als difunktionelle Polyorganosiloxanverbindungen verwendet.

Dabei wurde gefunden, dass der erfindungsgemäße Härter eine verbesserte Wirkung beim Härten von Silikonkautschukmassen, insbesondere von Dichtstoffformulierungen, in Gegenwart von Wasser oder Luftfeuchtigkeit bei Raumtemperatur hat. Insbesondere hat der erfindungsgemäße Härter den Vorteil, dass er bei Hydrolyse Moleküle abgibt, die in toxikologischer Hinsicht unbedenklich sind. Ferner sind die vom Härter bei Hydrolyse abgegebenen Moleküle auch nicht korrosiv oder aggressiv gegenüber Werkstoffen wie Metallen, Mörtel, oder Stein.

"Dichtungsmittel" oder "Dichtungsmassen" bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien.

Die Bezeichnung "Klebstoff" bezieht sich auf Stoffe, die Flügelteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

Unter "Härter" werden insbesondere vernetzungsfähige Silanverbindungen, verstanden, die mindestens zwei durch Hydrolyse abspaltbare Gruppen aufweisen. Beispiele für derartige vernetzungsfähige Silanverbindungen sind Si(OCH₃)₄, Si(CH₃)(OCH₃)₃ und Si(CH₃)(C₂H₅)(OCH₃)₂. Härter können auch als Vernetzer bezeichnet werden. "Härter" umfasst insbesondere auch "Härtersysteme", die insbesondere mehr als eine vernetzungsfähige Silanverbindung enthalten können.

In der allgemeinen Strukturformel (I) ist der Hydroxycarbonsäureesterrest über das Sauerstoffatom der Hydroxygruppe an das Siliciumatom gebunden. Beispielsweise kann eine im erfindungsgemäßen Härter enthaltene Verbindung mit der allgemeinen Strukturformel R¹ₘSi(R)₄₋ₘ, in der m 1 ist, die allgemeine Strukturformel (la) aufweisen:

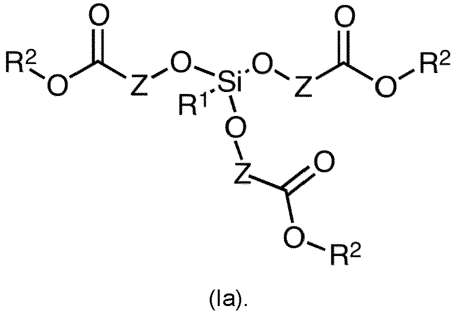

Ferner kann jeder Rest R¹ verschieden sein, wenn mehrere Reste R¹ an das Siliciumatom gebunden sind. Ferner können die Reste R³und R⁴ entlang der Kohlenstoffkette -(CR³R⁴)ₙ-, wobei n eine ganze Zahl von 2 bis 10 ist, für jedes Kohlenstoffatom der Kette unabhängig voneinander verschieden sein. Oligomere und Polymere des Härters sind insbesondere mindestens zwei Monomere Verbindungen mit der allgemeinen Strukturformel R¹ₘSi(R)₄₋ₘ, in denen mindestens zwei Siliciumatome der verschiedenen Monomere über Siloxansauerstoffe miteinander verbunden sind. Entsprechend der Anzahl an verbindenden Siloxansauerstoffen am Siliciumatom ist die Anzahl der Reste R reduziert.

Mit der Bezeichnung "Alkylgruppe" ist eine gesättigte Kohlenwasserstoffkette gemeint. Alkylgruppen weisen insbesondere die allgemeine Formel -CₙH₂ₙ₊₁ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1- bis C16-Alkylgruppen sind Methyl-, Ethyl-, Propyl-, Butyl-, Isopropyl-, iso-Butyl-, sec-Butyl-, tert-Butyl-, n-Pentyl- und Ethylhexyl. Entsprechend bezeichnet eine "C1- bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel -CₙH₂ₙ₋₁ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

"Arylgruppen" bezeichnen monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht speziell angegeben ist.

Eine "aromatische Gruppe" bezeichnet cyclische, planare Kohlenwasserstoffe mit aromatischem System. Eine aromatische Gruppe mit 4 bis 14 C-Atomen bezeichnet insbesondere eine aromatische Gruppe, die 4 bis 14 Kohlenstoffatome enthält. Die aromatische Gruppe kann insbesondere monocyclisch, bicyclisch oder tricyclisch sein. Eine aromatische Gruppe kann ferner auch 1 bis 5 Heteroatome ausgewählt aus der Gruppe bestehend aus N, O, und S enthalten. Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispiele jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* eine aromatische Gruppe mit 6 Kohlenstoffatomen, insbesondere Benzol, ist, zwei Wasserstoffatome von der aromatischen Gruppe, insbesondere von Benzol, entfernt sein, um eine Eingliederung in die Strukturformel zu erlauben.

Eine "Cycloalkylgruppe" bezeichnet einen Kohlenwasserstoffring, der nicht aromatisch ist. Insbesondere bezeichnet eine Cycloalkylgruppe mit 4 bis 14 C-Atomen einen nichtaromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppel- oder Dreifachbindung auf, wobei die Cycloalkylgruppe jedoch nicht aromatisch ist. Cycloalkylgruppen können insbesondere auch substituiert sein, auch wenn dies nicht speziell angegeben ist.

Eine "Aralkylgruppe" bezeichnet eine durch eine Arylgruppe substituierte Alkylgruppe. Eine "C5- bis C15-Aralkylgruppe" bezeichnet insbesondere eine Aralkylgruppe mit 5 bis 15 Kohlenstoffatomen, wobei darin sowohl die Kohlenstoffatome der Alkylgruppe als auch der Arylgruppe enthalten sind. Beispiele für Aralkylgruppen sind Benzyl- und Phenylethyl. Aralkylgruppen können insbesondere auch substituiert sein, auch wenn dies nicht spezielle angegeben ist.

Ein "cyclisches Ringsystem" bezeichnet einen Kohlenwasserstoffring, der nicht aromatisch ist. Insbesondere bezeichnet ein cyclisches Ringsystem mit 4 bis 14 C-Atomen ein nichtaromatisches Kohlenwasserstoffringsystem mit 4 bis 14 Kohlenstoffatomen. Ein cyclisches Ringsystem kann aus einem einzelnen Kohlenwasserstoffring (monocyclisch), aus zwei Kohlenwasserstoffringen (bicyclisch) oder aus drei Kohlenwasserstoffringen (tricyclisch) bestehen. Insbesondere können cyclische Ringsysteme auch 1 bis 5 Heteroatome, bevorzugt ausgewählt aus der Gruppe bestehend aus N, O, und S enthalten.

"Gesättigte cyclische Ringsysteme" sind nicht aromatisch und weisen auch keine Doppel- oder Dreifachbindungen auf. Beispiele für gesättigte cyclische Ringsysteme sind Cyclopentan, Cyclohexan, Decalin, Norbornan und 4H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* ein cyclisches Ringsystem mit 6 Kohlenstoffatomen, insbesondere Cyclohexan, ist, zwei Wasserstoffatome von dem cyclischen Ringsystem, insbesondere von Cyclohexan, entfernt sein, um eine Eingliederung in die Strukturformel zu erlauben.

Ein "teilweise ungesättigtes cyclisches Ringsystem" weist im Gegensatz zu einem gesättigten cyclischen Ringsystem mindestens eine Doppel- oder Dreifachbindung auf, wobei das cyclische Ringsystem jedoch nicht aromatisch ist. Beispiele für ungesättigte cyclische Ringsysteme sind Cyclopenten, Cyclohexen, Norbornen und 2H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH₃, wobei R* ein cyclisches Ringsystem mit 6 Kohlenstoffatomen, insbesondere Cyclohexen, ist, zwei Wasserstoffatome von dem cyclischen Ringsystem, insbesondere von Cyclohexen, entfernt sein, um eine Eingliederung in die Strukturformel zu erlauben.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1-bis C4-Alkyl, Methyl-, Ethyl-, Propyl-, Butyl-, Phenyl-, Benzyl-, Halogen-, Fluor-, Chlor-, Brom-, Iod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette verbunden ist.

Der erfindungsgemäße Härter enthält eine Verbindung mit der allgemeinen Strukturformel R¹ₘSi(R)₄₋ₘ, wobei m eine ganze Zahl von 0 bis 2 sein kann. Die Verbindung mit der allgemeinen Strukturformel R¹ₘSi(R)₄₋ₘ wird insbesondere auch als Silan bezeichnet. Somit kann der Härter also ein Silan enthalten, das über zwei, drei oder vier hydrolysierbare Gruppen verfügt. Bevorzugt ist m 0 oder 1, so dass der Härter ein Silan mit drei oder vier hydrolysierbaren Gruppen enthält. Auf diese Weise kann der Vernetzungsgrad des Härters gesteuert werden und die Lösemittelresistenz und/oder die mechanischen Eigenschaften können eingestellt werden.

Gemäß einer weiteren Ausführungsform der Erfindung ist in der allgemeinen Strukturformel R¹ₘSi(R)₄₋ₘ m = 2. Dadurch weist die allgemeine Strukturformel zwei Reste R¹ auf. Die Reste R¹ können gleich oder verschieden voneinander sein. Durch die Wahl der Reste R¹ kann die Geschwindigkeit der Vernetzung gesteuert werden.

Gemäß der Erfindung ist n eine ganze Zahl von 2 bis 10, bevorzugt von 2 bis 5.

Gemäß einer Ausführungsform der Erfindung bedeutet jeder R¹ unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2-bis C8-Alkenylgruppe oder eine optional substituierte C4- bis C10-Arylgruppe. Insbesondere kann jeder R¹ unabhängig voneinander Methyl-, Ethyl-, Propyl-, Vinyl-, Phenyl- oder Allyl- bedeuten. Dabei bedeutet jeder R¹ unabhängig voneinander besonders bevorzugt Methyl-, Propyl- oder Vinyl. Praktische Versuche haben gezeigt, dass Härter mit derartigen Resten Dichtstoffe mit guten mechanischen Eigenschaften ergeben. Ferner sind Dichtstoffe mit derartigen Resten meist farblos und transparent.

Gemäß einer weiteren Ausführungsform der Erfindung bedeuten jeder R³ und R⁴ unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe. Insbesondere sind jeder R³ und R⁴ unabhängig voneinander ausgewählt aus der Gruppe bestehend aus H, Methyl-, Ethyl-, Propyl-, Butyl-, n-Butyl-, sec-Butyl-, iso-Butyl- und tert-Butyl-. Dabei können die Reste R³und R⁴ entlang der Kohlenstoffkette -(CR³R⁴)ₙ-, wobei n eine ganze Zahl von 2 bis 10, insbesondere von 2 bis 10 oder von 2 bis 5, ist, für jedes Kohlenstoffatom der Kette unabhängig voneinander verschieden sein.

Gemäß einer weiteren Ausführungsform der Erfindung bedeutet R² eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe, eine C5- bis C11-Aralkylgruppe oder eine C4- bis C10-Arylgruppe. Insbesondere ist R² ausgewählt aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Phenyl-, Naphthyl- und Cyclohexyl. Dabei ist R² besonders bevorzugt ausgewählt aus der Gruppe bestehend aus Methyl-, Ethyl-, Isopropyl-, n-Butyl- und 2-Ethylhexyl-. Härter enthaltend derartige Verbindungen führen zu Dichtstoffen mit guten mechanischen Eigenschaften. Ferner lassen sie sich gut compoundieren. Die resultierenden Dichtstoffe sind weiterhin transparent und farblos.

Gemäß einer weiteren Ausführungsform der Erfindung ist Z eine optional substituierte aromatische Gruppe mit 4 bis 14 C-Atomen, wobei die aromatische Gruppe kein Benzolrest ist. Ein divalenter Benzolrest bezeichnet dabei, wie hierin beschrieben, dass an einem Benzolring zwei Wasserstoffatome entfernt wurden, um eine Eingliederung in die allgemeine Strukturformel, insbesondere in die allgemeine Strukturformel (I), zu ermöglichen. Für die Eingliederung der aromatischen Gruppe in die allgemeine Strukturformel (I) gilt Entsprechendes. Praktische Versuche haben ergeben, dass Härter enthaltend derartige Verbindungen Dichtstoffe mit besonders guten mechanischen Eigenschaften ergeben. Ferner weisen Härter enthaltend derartige Verbindungen einen angenehmen Geruch auf, da sie bei der Hydrolyse Substanzen freisetzen, die einen angenehmen Geruch aufweisen. Außerdem sind Dichtstoffe mit derartigen Härtern transparent und farblos.

Neben dem divalenten Benzolrest kann Z auch andere aromatische Gruppen bedeuten. Beispielsweise kann Z divalente, substituierte Benzolringe, wie Toluol, Xylol, Phenol, Anisol, oder Chlorbenzol bedeuten. Ferner kann Z auch divalentes Naphthalin oder Anthracen bedeuten, die wiederum optional substituiert sein können.

Demgemäß kann der Hydroxycarbonsäureesterrest R der Verbindung, die im erfindungsgemäßen Härter enthalten ist, auch von Naphthalincarbonsäurehydroxyalkylestern, insbesondere von 2-Naphthalincarbonsäure-3-hydroxy-ethylester abstammen.

Ferner kann in dieser Ausführungsform die optional substituierte aromatische Gruppe auch 0 bis 5 Heteroatome, ausgewählt aus der Gruppe bestehend aus N, O und S, enthalten. Beispiele für solche aromatischen Gruppen sind Furan, Pyrrol und Chinolin, die wiederum optional substituiert sein können.

Wie weiter oben beschrieben sind an der aromatischen Gruppe beispielsweise zwei Wasserstoffatome entfernt, um eine Eingliederung in die allgemeine Strukturformel (I) zu ermöglichen.

Überraschend wurde gefunden, dass es insbesondere mit den erfindungsgemäßen Härtern möglich ist, Silikonkautschukmassen bereitzustellen, für deren Aushärtung keine metallorganischen Katalysatoren, insbesondere keine Organozinnverbindungen, benötigt werden. Dies gilt insbesondere für erfindungsgemäße Härter, die eine Verbindung mit der allgemeinen Strukturformel R¹ₘSi(R)₄₋ₘ enthalten, wobei R die allgemeine Strukturformel (I) wie oben definiert aufweist und Z eine optional substituierte aromatische Gruppe mit 4 bis 14 C-Atomen bedeutet.

Gemäß einer weiteren Ausführungsform der Erfindung ist im erfindungsgemäßen Härter eine Verbindung mit der allgemeinen Strukturformel R¹ₘSi(R)₄₋ₘ enthalten, wobei jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
R ein Hydroxycarbonsäureesterrrest mit der allgemeinen Strukturformel (II) ist: 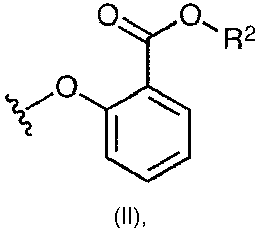
wobei R² eine optional substituierte, geradkettige oder verzweigte C1- bis C16-Alkylgruppe, eine C4- bis C14-Cycloalkylgruppe oder eine C5- bis C15-Aralkylgruppe bedeutet
oder Oligomere oder Polymere des Härters.. In der allgemeinen Strukturformel (II) ist der Hydroxycarbonsäureesterrest über das Sauerstoffatom der Hydroxygruppe an das Siliciumatom gebunden.

Gemäß einer weiteren Ausführungsform der Erfindung bedeutet R² eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe oder eine C5- bis C11-Aralkylgruppe. Insbesondere ist R² ausgewählt aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Naphthyl- und Cyclohexyl. Dabei ist R² besonders bevorzugt ausgewählt aus der Gruppe bestehend aus Methyl-, Ethyl-, Isopropyl-, n-Butyl- und 2-Ethylhexyl-, insbesondere aus der Gruppe bestehend aus Ethyl- und 2-Ethylhexyl. Härter enthaltend derartige Verbindungen führen zu Dichtstoffen mit guten mechanischen Eigenschaften. Ferner lassen sie sich gut compoundieren. Die resultierenden Dichtstoffe sind weiterhin transparent und farblos.

Gemäß einer weiteren Ausführungsform der Erfindung bedeutet jeder R¹ unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2-bis C8-Alkenylgruppe oder eine optional substituierte C4- bis C10-Arylgruppe. Insbesondere kann jeder R¹ unabhängig voneinander Methyl-, Ethyl-, Propyl-, Vinyl-, Phenyl- oder Allyl- bedeuten.

Gemäß einer weiteren Ausführungsform der Erfindung ist in der Verbindung mit der allgemeine Strukturformel R¹ₘSi(R)₄₋ₘ m = 1, R¹ bedeutet Vinyl- und R weist die hierin beschriebene allgemeine Strukturformel (II) auf, wobei R² Ethyl- bedeutet. Diese Verbindung wird insbesondere auch als Tris(ethylsalicylato)vinylsilan bezeichnet.

Gemäß einer weiteren Ausführungsform der Erfindung ist in der Verbindung mit der allgemeine Strukturformel R¹ₘSi(R)₄₋ₘ m = 1, R¹ bedeutet Methyl- und R weist die hierin beschriebene allgemeine Strukturformel (II) auf, wobei R² Ethyl- bedeutet. Diese Verbindung wird insbesondere auch als Tris(ethylsalicylato)methylsilan bezeichnet.

Gemäß einer weiteren Ausführungsform der Erfindung ist in der Verbindung mit der allgemeine Strukturformel R¹ₘSi(R)₄₋ₘ m = 1, R¹ bedeutet Propyl- und R weist die hierin beschriebene allgemeine Strukturformel (II) auf, wobei R² Ethyl- bedeutet. Diese Verbindung wird insbesondere auch als Tris(ethylsalicylato)propylsilan bezeichnet.

Gemäß einer weiteren Ausführungsform der Erfindung ist in der Verbindung mit der allgemeine Strukturformel R¹ₘSi(R)₄₋ₘ m = 1, R¹ bedeutet Vinyl- und R weist die hierin beschriebene allgemeine Strukturformel (II) auf, wobei R² 2-Ethylhexyl- bedeutet. Diese Verbindung wird insbesondere auch als Tris(2-ethylhexylsalicylato)vinylsilan bezeichnet.

Gemäß einer weiteren Ausführungsform der Erfindung ist in der Verbindung mit der allgemeine Strukturformel R¹ₘSi(R)₄₋ₘ m = 1, R¹ bedeutet Methyl- und R weist die hierin beschriebene allgemeine Strukturformel (II) auf, wobei R² 2-Ethylhexyl- bedeutet. Diese Verbindung wird insbesondere auch als Tris(2-ethylhexylsalicylato)methylsilan bezeichnet.

Gemäß einer weiteren Ausführungsform der Erfindung ist in der Verbindung mit der allgemeine Strukturformel R¹ₘSi(R)₄₋ₘ m = 1, R¹ bedeutet Propyl- und R weist die hierin beschriebene allgemeine Strukturformel (II) auf, wobei R² 2-Ethylhexyl- bedeutet. Diese Verbindung wird insbesondere auch als Tris(2-ethylhexylsalicylato)propylsilan bezeichnet. Beispielsweise kann eine im erfindungsgemäßen Härter enthaltene Verbindung mit der allgemeinen Strukturformel R¹ₘSi(R)₄₋ₘ, in der m 1 ist, gemäß dieser Ausführungsform die allgemeine Strukturformel (IIa) aufweisen:

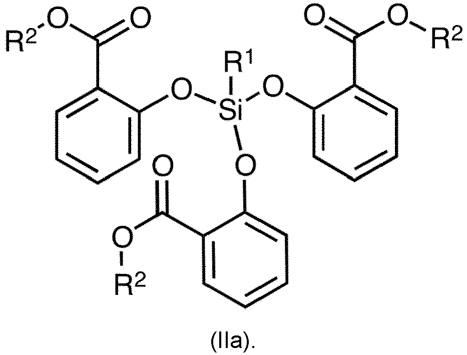

Es wurde gefunden, dass derartige Härter positive Eigenschaften für Dichtstoffformulierungen aufweisen. Zum einen setzen derartige Härter bei der Hydrolyse Salicylsäurederivate frei, die toxikologisch unbedenklich sind. Ferner weisen diese Salicylsäurederivate einen angenehmen Geruch auf. Außerdem wurde gefunden, dass solche Härter bei der Verwendung in Dichtstoffen zu guten mechanischen Eigenschaften der Dichtstoffe führen. Dichtstoffe mit diesen Härtern weisen ferner ein farbloses und transparentes Erscheinen auf.

Alternativ hat sich gezeigt, dass im erfindungsgemäßen Härter enthaltene Verbindungen der allgemeinen Formel R¹ₘSi(R)₄₋ₘ, in der m 1 ist und die gemäß dieser Ausführungsform die allgemeine Strukturformel (IIb) aufweisen, ebenfalls positive Eigenschaften zeigen:

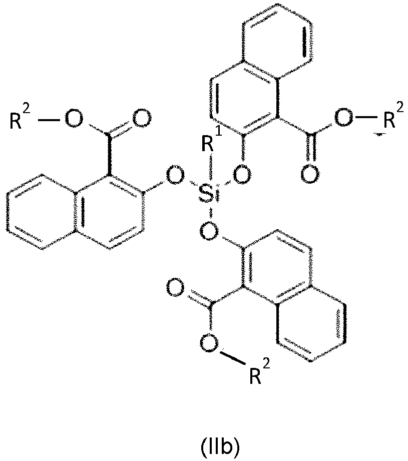

Gemäß dieser Ausführungsform ist in der allgemeinen Strukturformel (IIb) R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet, und R² eine optional substituierte, geradkettige oder verzweigte C1- bis C16-Alkylgruppe, eine C4-bis C14-Cycloalkylgruppe, eine C5- bis C15-Aralkylgruppe oder eine C4- bis C14-Arylgruppe bedeutet, oder Oligomere oder Polymere des Härters. Insbesondere ist R² ausgewählt aus der Gruppe bestehend aus einer optional substituierten geradkettigen oder verzweigten C1- bis C12-Alkylgruppe, insbesondere einer optional substituierten, geradkettigen oder verzweigten C1- bis C8-Alkylgruppe, einer C4- bis C10-Cycloakylgruppe, einer C5- bis C10-Arylgruppe oder einer C5- bis C11-Aralkylgruppe. Besonders bevorzugt ist R² ausgewählt aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Phenyl-, Naphthyl- und Cyclohexyl.Praktische Versuche haben ergeben, dass Härter enthaltend derartige Verbindungen besonders positive Eigenschaften für Dichtstoffformulierungen aufweisen können, insbesondere in Bezug auf deren mechanische Eigenschaften sowie deren Geruch.

Gemäß einer weiteren Ausführungsform der Erfindung ist in der Verbindung mit der allgemeine Strukturformel R¹ₘSi(R)₄₋ₘ m = 1, R¹ bedeutet Methyl- und R weist die hierin beschriebene allgemeine Strukturformel (IIb) auf, wobei R² Ethyl-bedeutet. Diese Verbindung wird insbesondere auch als Tris(2-Naphthalincarbonsäure-3-hydroxyethyl)methylsilan bezeichnet.

Praktische Versuche haben ergeben, dass sich optimale Ergebnisse einstellen, wenn die im erfindungsgemäßen Härter enthaltene Verbindung mit der allgemeinen Strukturformel R¹ₘSi(R)₄₋ₘ ausgewählt ist aus der Gruppe bestehend aus Tris(2-ethylhexylsalicylato)ethylsilan, Tris(2-ethylhexylsalicylato)phenylsilan, Tris(ethylhexylsalicylato)ethylsilan, Tris(ethylhexylsalicylato)methylsilan, Tris(ethylhexylsalicylato)phenylsilan, Tris(ethylhexylsalicylato)propylsilan, Tris(ethylhexylsalicylato)vinylsilan, Tris(ethylsalicylato)ethylsilan, Tris(ethylsalicylato)phenylsilan, Tris(isopropylsalicylato)ethylsilan, Tris(isopropylsalicylato)phenylsilan, Tris(isopropylsalicylato)propylsilan, Tris(isopropylsalicylato)vinylsilan, Tris(methylsalicylato)ethylsilan, Tris(methylsalicylato)methylsilan, Tris(methylsalicylato)phenylsilan, Tris(methylsalicylato)vinylsilan, Tetra(2-ethylhexylsalicylato)silan, Tetra(ethylhexylsalicylato)silan, Tetra(ethylsalicylato)silan, Tetra(isopropylsalicylato)silan, Tetra(methylsalicylato)silan
oder Oligomere oder Polymere des Härters. Insbesondere bevorzugt sind Verbindungen der allgemeinen Strukturformel R¹ₘSi(R)₄₋ₘ ausgewählt aus der Gruppe bestehend aus Tris(ethylsalicylato)vinylsilan, Tris(ethylsalicylato)methylsilan,
Tris(ethylsalicylato)propylsilan, Tris(2-ethylhexylsalicylato)vinylsilan, Tris(2-ethylhexylsalicylato)methylsilan und Tris(2-ethylhexylsalicylato)propylsilan. Es hat sich gezeigt, dass Härter enthaltend eine dieser bevorzugten Verbindungen Dichtstoffformulierungen ergeben, die gute Eigenschaften aufweisen. Zum einen setzen diese Dichtstoffe Salicylsäurederivate frei, die toxikologisch unbedenklich sind und einen angenehmen Geruch aufweisen. Ferner können farblose und transparente Dichtstoffe erhalten werden. Zudem weisen Dichtstoffformulierungen mit Härtern enthaltend eine dieser bevorzugten Verbindungen gute mechanische Eigenschaften auf.

Gemäß einer weiteren bevorzugten Ausführungsform der Erfindung ist in dem Härter eine Verbindung mit der Strukturformel (IIc) enthalten: 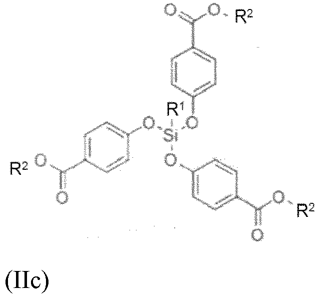 wobei R1 Vinyl bedeutet und R2 Ethylhexyl bedeutet.

Gemäß einer weiteren Ausführungsform der Erfindung enthält der Härter zusätzlich eine Verbindung mit der allgemeinen Strukturformel R⁵ₒSi(R)₄₋ₒ, wobei R⁵ eine optional substituierte, geradkettige oder verzweigte C1- bis C16-Alkylgruppe, insbesondere eine optional substituierte, geradkettige oder verzweigte C1- bis C12- oder eine C1- bis C8-Alkylgruppe oder eine Methyl- oder Propylgruppe, oder eine optional substituierte, geradkettige oder verzweigte C2- bis C16-Alkenylgruppe, insbesondere eine optional substituierte, geradkettige oder verzweigte C2- bis C12- oder eine C2- bis C8-Alkenylgruppe oder eine Vinylgruppe oder eine optional substituierte C4- bis C14-Arylgruppe oder eine Phenylgruppe ist und R wie hierin beschrieben definiert ist und o eine ganze Zahl von 0 bis 2 ist und wobei R¹ₘSi(R)₄₋ₘ und R⁵ₒSi(R)₄₋ₒ nicht gleich sein können.

Gemäß dieser Ausführungsform kann der Härter zusätzlich eine Verbindung mit der allgemeinen Strukturformel R⁵ₒSi(R)₄₋ₒ enthalten, wobei o = 1 ist, R⁵ eine Methylgruppe ist und R die hierin beschriebene allgemeine Strukturformel (II) aufweist, wobei R² Ethyl-bedeutet. Diese Verbindung wird insbesondere auch als Tris(ethylsalicylato)methylsilan bezeichnet.

Ferner kann gemäß dieser Ausführungsform der Härter zusätzlich eine Verbindung mit der allgemeinen Strukturformel R⁵ₒSi(R)₄₋ₒ enthalten, wobei o = 1 ist, R⁵ eine Propylgruppe ist und R die hierin beschriebene allgemeine Strukturformel (II) aufweist, wobei R² Ethyl-bedeutet. Diese Verbindung wird insbesondere auch als Tris(ethylsalicylato)propylsilan bezeichnet.

Ferner kann gemäß dieser Ausführungsform der Härter zusätzlich eine Verbindung mit der allgemeinen Strukturformel R⁵ₒSi(R)₄₋ₒ enthalten, wobei o = 1 ist, R⁵ eine Methylgruppe ist und R die hierin beschriebene allgemeine Strukturformel (II) aufweist, wobei R² 2-Ethylhexyl- bedeutet. Diese Verbindung wird insbesondere auch als Tris(2-ethylhexylsalicylato)methylsilan bezeichnet.

Ferner kann gemäß dieser Ausführungsform der Härter zusätzlich eine Verbindung mit der allgemeinen Strukturformel R⁵ₒSi(R)₄₋ₒ enthalten, wobei o = 1 ist, R⁵ eine Propylgruppe ist und R die hierin beschriebene allgemeine Strukturformel (II) aufweist, wobei R² 2-Ethylhexyl- bedeutet. Diese Verbindung wird insbesondere auch als Tris(2-ethylhexylsalicylato)propylsilan bezeichnet.

Durch einen erfindungsgemäßen Härter, der die beiden Verbindungen R¹ₘSi(R)₄₋ₘ und R⁵ₒSi(R)₄₋ₒ enthält, können die Eigenschaften von Dichtstoffformulierungen, die diesen Härter umfassen, gut eingestellt werden. Beispielsweise kann vorteilhaft die Vernetzungsgeschwindigkeit der Dichtstoffformulierungen eingestellt werden. Weiterhin können dadurch aber auch die mechanischen Eigenschaften justiert werden. Dies gilt insbesondere für Kombinationen von Verbindungen R¹ₘSi(R)₄₋ₘ und R⁵ₒSi(R)₄₋ₒ, wobei jede der Verbindungen ausgewählt ist aus der Gruppe bestehend aus Tris(ethylsalicylato)vinylsilan, Tris(ethylsalicylato)methylsilan, Tris(ethylsalicylato)propylsilan, Tris(2-ethylhexylsalicylato)vinylsilan, Tris(2-ethylhexylsalicylato)methylsilan und Tris(2-ethylhexylsalicylato)propylsilan.

Der erfindungsgemäße Härter kann neben den beiden Verbindungen R¹ₘSi(R)₄₋ₘ und R⁵ₒSi(R)₄₋ₒ auch weitere, beispielsweise ein, zwei oder drei, Verbindungen mit der allgemeinen Strukturformel R^{KW}ₚSi(R)₄₋ₚ enthalten, wobei jeder R^{KW} unabhängig voneinander eine optional substituierte, geradkettige oder verzweigte C1- bis C16-Alkylgruppe, insbesondere eine optional substituierte, geradkettige oder verzweigte C1- bis C12- oder eine C1- bis C8-Alkylgruppe oder eine Methyl- oder Propylgruppe, oder eine optional substituierte, geradkettige oder verzweigte C2- bis C16-Alkenylgruppe, insbesondere eine optional substituierte, geradkettige oder verzweigte C2- bis C12- oder eine C2- bis C8-Alkenylgruppe oder eine Vinylgruppe oder eine optional substituierte C4-bis C14-Arylgruppe oder eine Phenylgruppe ist und R wie hierin beschrieben definiert ist und p eine ganze Zahl von 0 bis 2 ist.

Gemäß einer weiteren Ausführungsform enthält der erfindungsgemäße Härter mindestens eine Verbindung ausgewählt aus der Gruppe bestehend aus Tris(ethylsalicylato)vinylsilan, Tris(ethylsalicylato)methylsilan, Tris(ethylsalicylato)propylsilan, Tris(2-ethylhexylsalicylato)vinylsilan, Tris(2-ethylhexylsalicylato)methylsilan, Tris(2-ethylhexylsalicylato)propylsilan und Mischungen davon, oder der erfindungsgemäße Härter besteht daraus.

Gegenstand der vorliegenden Erfindung ist ferner ein Härter erhältlich durch Vermischen mindestens einer Verbindung mit der allgemeinen Strukturformel R¹ₘSi(R)₄₋ₘ mit einer Verbindung mit der allgemeinen Strukturformel R⁵ₒSi(R)₄₋ₒ, wobei jeder R¹ und jeder R⁵ unabhängig voneinander wie hierin beschrieben definiert sind und jeder R unabhängig voneinander wie hierin beschrieben definiert ist und m und o unabhängig voneinander eine ganze Zahl von 0 bis 2 sind. Beispielsweise kann es in Härtern enthaltend Mischungen verschiedener Verbindungen R¹ₘSi(R)₄₋ₘ und R⁵ₒSi(R)₄₋ₒ zu Austauschreaktionen zwischen den verschiedenen Gruppen R der verschiedenen Verbindungen kommen. Diese Austauschreaktionen können insbesondere bis zu einem Gleichgewichtszustand ablaufen. Dieser Prozess kann auch als Equilibrierung bezeichnet werden.

Zum Beispiel kann es in einer Mischung aus Tris(2-ethylhexylsalicylato)methylsilan und Tris(ethylsalicylato)propylsilan zu einem Austausch der 2-Ethylhexylsalicylat- und der Ethylsalicylatgruppen der beiden Silanverbindungen kommen. Dabei können insbesondere Härter entstehen, die beispielsweise Tris(2-ethylhexylsalicylato)methylsilan, Bis(2-ethylhexylsalicylato)(ethylsalicylato)methylsilan, Bis(ethylsalicylato)(2-ethylhexylsalicylato)methylsilan, Tris(ethylsalicylato)methylsilan, Tris(ethylsalicylato)propylsilan, Bis(ethylsalicylato)(2-ethylhexylsalicylato)propylsilan, Bis(2-ethylhexylsalicylato)(ethylsalicylato)propylsilan und/oder Tris(2-ethylhexylsalicylato)propylsilan enthalten oder daraus bestehen.

Die voranstehend beschriebenen Austauschreaktionen, speziell die Equilibrierung, können insbesondere auch mit geeigneten Gruppen R^{Au} anderer in einer Silikonkautschukzusammensetzung enthaltener Silane stattfinden. Für Austauschreaktionen geeignete Gruppen R^{Au} sind beispielsweise Alkoxy-, Carboxylat- und Oximgruppen, um einige zu nennen. Dementsprechend können insbesondere die Gruppen R^{Au} von Silanen vom Typ (R^{In})_{z}Si(R^{Au})_{4-z} mit den Gruppen R der in dem erfindungsgemäßen Härter enthaltenen Verbindungen mit der allgemeinen Strukturformel R¹ₘSi(R)₄₋ₘ und/oder R⁵ₒSi(R)₄₋ₒ Austauschreaktionen eingehen, wobei die Gruppen R^{In} keine Austauschreaktionen eingehen und z eine ganze Zahl von 0 bis 3 ist. Sind zum Beispiel in einer Silikonkautschukzusammensetzung Triethoxymethylsilan und Tris(ethylsalicylato)propylsilan enthalten, so können die Ethoxygruppen mit den Ethylsalicylatogruppen austauschen. Durch diese Austauschreaktion kann die Silikonkautschukzusammensetzung insbesondere die Verbindungen Triethoxymethylsilan, Diethoxy(ethylsalicylato)methylsilan, Ethoxy-bis(ethylsalicylato)methylsilan, Tris(ethylsalicylato)methylsilan, Tris(ethylsalicylato)propylsilan, Ethoxy-bis(ethylsalicylato)propylsilan, Diethoxy(ethylsalicylato)propylsilan und/oder Triethoxypropylsilan enthalten. Dementsprechend können durch die Austauschreaktionen die verschiedenen geeigneten Gruppen R^{Au} und R auf die in einer Silikonkautschukzusammensetzung enthaltenen entsprechenden Silanverbindungen verteilt werden, wobei sich insbesondere ein Gleichgewichtszustand einstellen kann.

Die Erfindung stellt weiterhin Verfahren zu Herstellung der erfindungsgemäßen Härter bereit.

Das erfindungsgemäße Verfahren umfasst das Umsetzen einer Verbindung mit der allgemeinen Formel R¹ₘSiX₄₋ₘ mit (4-m) Äquivalenten mindestens eines Hydroxycarbonsäureesters mit der allgemeinen Strukturformel (III), 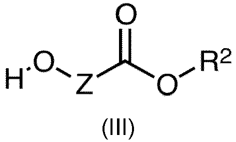 wobei
jeder R¹ unabhängig voneinander eine optional substituierte, geradkettige oder verzweigte C1- bis C16-Alkylgruppe oder eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
X ausgewählt ist aus der Gruppe bestehend aus einem Alkoxyrest mit mindestens einem Kohlenstoffatom und einem Halogenatom, insbesondere einem Chloratom,
R² eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
Z eine optional substituierte aromatische Gruppe mit 4 bis 14 C-Atomen oder -(CR³R⁴)ₙ- oder ein gesättigtes oder teilweise ungesättigtes cyclisches Ringsystem mit 4 bis 14 C-Atomen bedeutet,
jeder R³ und R⁴ unabhängig voneinander H oder eine optional substituierte, geradkettige oder verzweigte C1- bis C16 Alkylgruppe oder eine C4- bis C14-Arylgruppe bedeuten, und
n eine ganze Zahl von 2 bis 10 ist,
   wobei
wenn n 1 ist, R³ und R⁴ nicht H bedeuten und R³ nicht H und R⁴ nicht Methyl bedeuten und R³ nicht Methyl und R⁴ nicht H bedeuten.

Gemäß erfindungsgemäßem Verfahren ist n eine ganze Zahl von 2 bis 10, bevorzugt von 2 bis 5.

Die Gruppe X kann im erfindungsgemäßen Verfahren ein Alkoxyrest mit mindestens einem Kohlenstoffatom sein. Insbesondere kann die Gruppe X ein Alkoxyrest mit 1 bis 4 Kohlenstoffatomen, beispielsweise -OCH₃, -OC₂H₅, -OC₃H₇ oder -OC₄H₉ sein. Die Reste R³ und R⁴ entlang der Kohlenstoffkette -(CR³R⁴)ₙ-, wobei n eine ganze Zahl von 2 bis 10, insbesondere von 2 bis 5, ist, können für jedes Kohlenstoffatom der Kette unabhängig voneinander verschieden sein.

Im erfindungsgemäßen Verfahren kann die Verbindung mit der allgemeinen Formel R¹ₘSiX₄₋ₘ mit (4-m) Äquivalenten einer einzigen Art von Hydroxycarbonsäureester umgesetzt werden oder die Verbindung kann mit einer Mischung verschiedener Arten von Hydroxycarbonsäureestern umgesetzt werden, wobei sich die Mischung der Hydroxycarbonsäureester auf insgesamt (4-m) Äquivalente summiert. Durch den Einsatz einer einzigen Art von Hydroxycarbonsäureester im Herstellungsverfahren werden reine Verbindungen erhalten, durch den Einsatz einer Mischung verschiedener Arten von Hydroxycarbonsäureestern werden gemischte Härter erhalten.

Gemäß einer weiteren Ausführungsform des erfindungsgemäßen Verfahrens bedeutet jeder R¹ unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C1- bis C8- Alkenylgruppe, oder eine optional substituierte C4- bis C10-Arylgruppe.

Gemäß einer weiteren Ausführungsform des erfindungsgemäßen Verfahrens bedeuten jeder R³ und R⁴ unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe. Dabei können die Reste R³und R⁴ entlang der Kohlenstoffkette -(CR³R⁴)ₙ-, wobei n eine ganze Zahl von 2 bis 10, insbesondere von 2 bis 5, ist, für jedes Kohlenstoffatom der Kette unabhängig voneinander verschieden sein.

Gemäß einer weiteren Ausführungsform des erfindungsgemäßen Verfahrens bedeutet R² eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloalkylgruppe, eine C5- bis C11-Aralkylgruppe oder eine C4- bis C10-Arylgruppe.

Gemäß einer weiteren Ausführungsform des erfindungsgemäßen Verfahrens bedeutet jeder R¹ unabhängig voneinander Methyl-, Ethyl-, Propyl-, Vinyl-, Phenyl- oder Allyl-. Ferner gilt für den Hydroxycarbonsäureester gemäß dem erfindungsgemäßen Verfahren das vorstehend zum Hydroxycarbonsäureesterrest R Gesagte entsprechend.

Ferner ist es möglich, im erfindungsgemäßen Verfahren unterschiedliche Verbindungen mit der allgemeinen Formel R¹ₘSiX₄₋ₘ einzusetzen, die sich insbesondere durch unterschiedliche Reste R¹ unterscheiden. Beispielsweise können die beiden Verbindungen CH₃SiCl₃ und (C₃H₇)SiCl₃ gleichzeitig im erfindungsgemäßen Verfahren eingesetzt werden. Diese können ferner mit verschiedenen Hydroxycarbonsäureestern umgesetzt werden. Dadurch können insbesondere Härtersysteme enthaltend oder bestehend aus verschiedenen vernetzungsfähigen Silanverbindungen direkt erhalten werden.

Gemäß einer weiteren Ausführungsform des erfindungsgemäßen Verfahrens ist Z eine optional substituierte aromatische Gruppe mit 6 C-Atomen, insbesondere ein divalenter Benzolrest.

Gemäß einer weiteren Ausführungsform des erfindungsgemäßen Verfahrens wird das Umsetzen der Verbindung mit der allgemeinen Formel R¹ₘSiX₄₋ₘ mit (4-m) Äquivalenten mindestens eines Hydroxycarbonsäureesters bei einer Temperatur von unter 60°C, bevorzugt unter 50°C, weiter bevorzugt unter 40°C und besonders bevorzugt unter 30°C durchgeführt.

Die Erfindung betrifft weiterhin einen Härter, der nach dem erfindungsgemäßen Verfahren erhältlich ist.

Gemäß einer bevorzugten Ausführungsform betrifft die Erfindung Härter, die gemäß des erfindungsgemäßen Verfahrens erhältlich sind, wobei wenn Z ein Benzolring ist, Z ein Hydroxycarbonsäureesterrest mit der allgemeinen Strukturformel (II) ist und R² keine C4-bis C14-Arylgruppe ist.

Die Erfindung betrifft ferner die Verwendung eines erfindungsgemäßen Härters zum Härten einer Silikonkautschukmasse. Dazu wird im Sinne dieser Erfindung eine Zusammensetzung hergestellt, die den erfindungsgemäßen Härter und eine geeignete Silikonkautschukmasse enthält.

Entsprechend umfasst eine erfindungsgemäße Zusammensetzung den oben beschriebenen erfindungsgemäßen Härter und zumindest eine Organosiliconverbindung, vorzugsweise den oben beschriebenen erfindungsgemäßen Härter und zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein alpha,omega-dihydroxyl-terminiertes Polyorganosiloxan. Ganz besonders bevorzugt sind alpha,omega-dihydroxyl-terminierte Polydiorganosiloxane, insbesondere alpha,omega-dihydroxyl-terminierte Polydialkylsiloxane, alpha,omega-dihydroxyl-terminierte Polydialkenylsiloxane oder alpha,omega-dihydroxyl-terminierte Polydiarylsiloxane. Neben homopolymeren alpha,omega-dihydroxyl-terminierten Polydiorganosiloxanen können auch heteropolymere alpha,omega-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliciumatom, als auch Copolymere aus Monomeren mit verschiedenen organischen Substituenten an einem Siliciumatom umfaßt sind, z.B. solche mit gemischten Alkyl-, Alkenyl- und/oder Arylsubstituenten.

Die bevorzugten organischen Substituenten umfassen geradkettige und verzweigte Alkylgruppen mit 1 bis 8 Kohlenstoffatomen, insbesondere Methyl-, Ethyl-, n- und isoPropyl-, und n-, sec- und tert-Butyl-, Vinyl- und Phenyl-. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können alpha,omega-dihydroxyl-terminierte Polydiorganosiloxane mit teilfluorierten oder perfluorierten organischen Substituenten verwendet werden oder alpha,omega-dihydroxyl-terminierte Polydiorganosiloxane mit durch Hydroxyl- und/oder Aminogruppensubstituierten organischen Substituenten an den Siliciumatomen.

Besonders bevorzugte Beispiele für eine Organosiliconverbindung sind alpha,omega-dihydroxyl-terminierte Polydialkylsiloxane, wie z.B. alpha,omega-dihydroxyl-terminierte Polydimethylsiloxane, alpha,omega-dihydroxyl-terminierte Polydiethylsiloxane oder alpha,omega-dihydroxyl-terminierte Polydivinylsiloxane, sowie alpha,omega-dihydroxyl-terminierte Polydiarylsiloxane, wie z.B. alpha,omega-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt. Es können auch Mischungen aus Polydiorganosiloxanen mit unterschiedlichen Viskositäten verwendet werden.

Falls gewünscht, kann die erfindungsgemäße Zusammensetzung weitere übliche Zusätze umfassen. Übliche Zusätze sind Füllstoffe, Farbmittel, Weichmacher, Thixotropiermittel, Benetzungsmittel, Haftmittel, Katalysatoren und andere.

Überraschenderweise hat sich gezeigt, dass der Einsatz von Aminopropyltriethoxysilan (AMEO) als Thixotropiermittel zu besonders stabilen Dichtstoffen mit hervorragenden mechanischen Eigenschaften und ausgezeichneter Stabilität führt. Gegenstand der Erfindung ist daher auch die Verwendung von AMEO als Thixotrophiemittel bei der Herstellung von Silikonkautschukmassen, insbesondere für die Bereitstellung von Dichtmassen.

Als Füllstoffe können sowohl verstärkende als auch nichtverstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotropiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt., insbesondere von 100 cSt, Paraffinöle und polysubstituierte Alkylbenzole.

Als Benetzungs- und/oder Haftmittel (Haftvermittler) können an sich bekannte Silanverbindungen mit organischen Substituenten am Siliciumatom verwendet werden, die sich von den erfindungsgemäß verwendeten Organosiliconverbindungen unterscheiden. Beispielsweise können Organosilane mit reaktiven Amin-, Carbonsäure-, Epoxy- oder Thiolgruppen verwendet werden. Spezielle Beispiele für Haftmittel (Haftvermittler) mit reaktiven Amin-, Carbonsäure- oder Thiolgruppen umfassen Aminosilane, wie Aminoethyl-aminopropyltrialkoxysilane. Konkrete Beispiele solcher Haftmittel (Haftvermittler) sind 3-Aminopropyltriethoxysilan, 3-Aminopropyltrimethoxysilan, Aminoethylaminopropyltrimethoxysilan, Butylaminopropyltriethoxysilan, Butylaminopropyltrimethoxysilan, Propylaminopropyltriethoxysilan, Propylaminopropyltrimethoxysilan, N-Cyclohexyl-3-aminopropyltrimethoxysilan, N-Cyclohexyl-3-aminopropyltriethoxysilan, und sogenanntens Co-oligomeric diamino/alkyl functional silan, welches als Dynasylan 1146 von Evonik erhältlich ist.

Als Haftmittel (Haftvermittler) können ebenfalls die folgenden Silanverbindungen mit anderen funktionellen Gruppen eingesetzt werden. Beispielsweise können Organosilane mit tertiären Amin-, Harnstoff-, Amid-, Carbamat- oder Isocyanuratgruppen verwendet werden. Konkrete Beispiele solcher Haftmittel (Haftvermittler) sind N,N'-Bis(triethoxysilylpropyl)harnstoff, Tris(triethoxysilylpropyl)diethylentriharnstoff, Dimethylaminopropyltrimethoxysilan, 1,3,5-Tris(trimethoxysilylpropyl)-isocyanurat, N-Methyl(3-Trimethoxysilyl)-propyl)-carbamat und N-Ethyl(3-Triethoxysilyl)-propyl)-carbamat. Insbesondere können auch Mischungen dieser Substanzen als Haftmittel (Haftvermittler) eingesetzt werden.

Ferner können metallorganische Katalysatoren verwendet werden, wie sie üblicherweise für kondensationsvernetzende Polysiloxane eingesetzt werden. Beispiele für Katalysatoren sind zinnorganische Verbindungen, wie beispielsweise Dibutylzinndilaurat, Dibutylzinndiacetat und Zinn(II)octoat. Als besonders geeignete Katalysatoren haben sich Alkyl-Zinn-Carboxylate, wie beispielsweise Dibutyl-Zinndilaurat, Dibutyl-Zinndivaleriat, Dibutyl-Zinndiacetat, Dibutyl-Zinndineodecanoat, Dibutyl-Zinndiacetylacetonat, Dioctyl-Zinn-bis(2-ethylhexanoat), Dibutyl-Zinndimaleat und Butylzinn-tris(2-ethylhexanoat) erwiesen. Titan-, Zirkonium- oder Aluminium-basierte Verbindungen können ebenfalls als Katalysatoren verwendet werden.

Es wurde gefunden, dass die Zusammensetzung unter Feuchtigkeitsausschluß über Zeitspannen von bis zu mehr als 12 Monaten aufbewahrt werden kann und unter dem Einfluß von Wasser oder Luftfeuchtigkeit bei Raumtemperatur polymerisiert.

Weiterhin ist vorteilhaft, dass die erfindungsgemäße Zusammensetzung beim Härten hauptsächlich Hydroxycarbonsäureester, wie beispielsweise Ethylsalicylsäureester (Ethylsalicylat) abgibt, welche im Gegensatz zu Oxim-Verbindungen, wie z.B. Butan-2-onoxim gesundheitlich unbedenklich sind, weder korrosiv noch aggressiv gegenüber Werkstoffen wie Metallen, Mörtel oder Stein (Marmor usw.) sind und einen angenehmen Geruch haben. Die ausgehärtete Zusammensetzung ist stippenfrei, transparent und klar.

Die erfindungsgemäße Zusammensetzung kann 30 bis 80 Gew.-%, bevorzugt 35 bis 70 Gew.-%, weiter bevorzugt 40 bis 60 Gew.%, der Organosiliconverbindung umfassen, jeweils bezogen auf das Gesamtgewicht der erfindungsgemäßen Zusammensetzung.

Die erfindungsgemäße Zusammensetzung kann ferner 10 bis 50 Gew.-%, bevorzugt 20 bis 40 Gew.-%, Weichmacher umfassen, jeweils bezogen auf das Gesamtgewicht der erfindungsgemäßen Zusammensetzung.

Weiterhin kann die erfindungsgemäße Zusammensetzung 1 bis 15 Gew.-%, bevorzugt 2 bis 14 Gew.-%, weiter bevorzugt 3 bis 13 Gew.-%, des erfindungsgemäßen Härters umfassen, jeweils bezogen auf das Gesamtgewicht der erfindungsgemäßen Zusammensetzung. Dabei kann der erfindungsgemäße Härter insbesondere die beiden hierin beschriebenen Verbindungen R¹ₘSi(R)₄₋ₘ und R⁵ₒSi(R)₄₋ₒ enthalten oder daraus bestehen. Insbesondere kann im erfindungsgemäßen Härter der erfindungsgemäßen Zusammensetzung die Verbindung R¹ₘSi(R)₄₋ₘ ausgewählt sein aus der Gruppe bestehend aus Tris(ethylsalicylato)vinylsilan, Tris(ethylsalicylato)methylsilan, Tris(ethylsalicylato)propylsilan, Tris(2-ethylhexylsalicylato)vinylsilan, Tris(2-ethylhexylsalicylato)methylsilan und Tris(2-ethylhexylsalicylato)propylsilan. Die Verbindung R⁵ₒSi(R)₄₋ₒ kann insbesondere ausgewählt sein aus der Gruppe bestehend aus Tris(ethylsalicylato)methylsilan, Tris(ethylsalicylato)propylsilan, Tris(2-ethylhexylsalicylato)methylsilan und Tris(2-ethylhexylsalicylato)propylsilan.

Besteht der erfindungsgemäße Härter in der erfindungsgemäßen Zusammensetzung aus den beiden Verbindungen R¹ₘSi(R)₄₋ₘ und R⁵ₒSi(R)₄₋ₒ so besteht der Härter bevorzugt zu 5 bis 70 Gew.-%, weiter bevorzugt zu 10 bis 60 Gew.-%, besonders bevorzugt zu 10 bis 55 Gew.-%, jeweils bezogen auf das Gesamtgewicht des erfindungsgemäßen Härters, aus der Verbindung R¹ₘSi(R)₄₋ₘ und bevorzugt zu 30 bis 95 Gew.-%, weiter bevorzugt 40 bis 90 Gew.-%, besonders bevorzugt zu 45 bis 90 Gew.-%, jeweils bezogen auf das Gesamtgewicht des erfindungsgemäßen Härters, aus der Verbindung R⁵ₒSi(R)₄₋ₒ. Gemäß einer Ausführungsform der Erfindung besteht der erfindungsgemäße Härter in der erfindungsgemäßen Zusammensetzung zu 50 Gew.-% aus der Verbindung R¹ₘSi(R)₄₋ₘ und zu 50 Gew.-% aus der Verbindung R⁵ₒSi(R)₄₋ₒ, jeweils bezogen auf das Gesamtgewicht des erfindungsgemäßen Härters.

Der erfindungsgemäße Härter kann jedoch auch nur aus der Verbindung R¹ₘSi(R)₄₋ₘ bestehen. In diesem Falle besteht der erfindungsgemäße Härter zu 100 Gew.-% aus der Verbindung R¹ₘSi(R)₄₋ₘ, bezogen auf das Gesamtgewicht des erfindungsgemäßen Härters. Dementsprechend kann der erfindungsgemäße Härter in der erfindungsgemäßen Zusammensetzung zu 100 Gew.-% aus der Verbindung R¹ₘSi(R)₄₋ₘ, bezogen auf das Gesamtgewicht des erfindungsgemäßen Härters, bestehen.

Die erfindungsgemäße Zusammensetzung kann ferner bevorzugt 1 bis 20 Gew.-%, weiter bevorzugt 3 bis 17 Gew.-%, besonders bevorzugt 4 bis 15 Gew.-% Füllstoff umfassen, jeweils bezogen auf das Gesamtgewicht der erfindungsgemäßen Zusammensetzung.

Ferner kann die erfindungsgemäße Zusammensetzung bevorzugt 0,001 bis 2 Gew.-%, weiter bevorzugt 0,005 bis 1 Gew.-%, besonders bevorzugt 0,01 bis 1 Gew.-% Katalysator umfassen, jeweils bezogen auf das Gesamtgewicht der erfindungsgemäßen Zusammensetzung. Gemäß einer weiteren Ausführungsform kann die Zusammensetzung im Wesentlichen frei von Katalysatoren, insbesondere von metallorganischen Katalysatoren wie Organozinnverbindungen, sein.

Die erfindungsgemäße Zusammensetzung kann bevorzugt 0,1 bis 5 Gew.-%, weiter bevorzugt 0,5 bis 4 Gew.-%, besonders bevorzugt 1 bis 3 Gew.-% Haftmittel (Haftvermittler) umfassen, jeweils bezogen auf das Gesamtgewicht der erfindungsgemäßen Zusammensetzung.

Gegenstand der Erfindung ist ferner eine Zusammensetzung, erhältlich durch Vermischen mindestens eines erfindungsgemäßen Härters enthaltend eine Verbindung mit der allgemeinen Strukturformel R¹ₘSi(R)₄₋ₘ, wobei jeder R¹ und jeder R unabhängig voneinander wie hierin beschrieben definiert sind und m eine ganze Zahl von 0 bis 2 ist, mit mindestens einem Haftmittel (Haftvermittler) und mindestens einer weiteren Komponente ausgewählt aus der Gruppe bestehend aus Thixotropiermittel, Organosiliconverbindung, Füllstoff, Farbmittel, Weichmacher, Benetzungsmittel und Katalysator. Dabei sind die Bestandteile Haftmittel (Haftvermittler), Thixotropiermittel, Organosiliconverbindung, Füllstoff, Farbmittel, Weichmacher, Benetzungsmittel und Katalysator wie hierin beschrieben. In derartigen Mischungen können die hierin beschriebenen Austauschreaktionen, insbesondere wie voranstehend für Mischungen von Verbindungen mit der allgemeinen Strukturformel R¹ₘSi(R)₄₋ₘ mit einer Verbindung mit der allgemeinen Strukturformel R⁵ₒSi(R)₄₋ₒ und/oder mit Silanen mit geeigneten Gruppen R^{Au} beschrieben, analog stattfinden. Dies ist insbesondere dann der Fall, wenn die entsprechenden Bestandteile, zum Beispiel Haftmittel (Haftvermittler) oder Thixotropiermittel, Silane vom voranstehend beschriebenen Typ (R^{In})_{z}Si(R^{Au} )_{4-z} mit geeigneten Gruppen R^{Au} sind.

Ebenfalls ist Gegenstand der Erfindung eine Verwendung der erfindungsgemäßen Zusammensetzung als Dichtungsmittel, Klebstoff, Vergussmasse oder Beschichtungsmittel. Die Zusammensetzung wird bevorzugt im Bauwesen als Dichtungsmittel als Klebstoff oder als Vergussmasse eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

Im Folgenden wird die Erfindung an konkreten, nicht limitierenden Beispielen veranschaulicht.

### BEISPIELE

### Synthesen der Härter

### Beispiel 1

### Synthese von Tris(ethylsalicylato)methylsilan (M(SEE)3):

In einem 4 L 4-Halskolben mit KPG-Rührer, Rückflusskühler, Tropftrichter und Temperaturfühler werden unter Stickstoffatmosphäre 604.20 g (534.69 mL; 3.64 mol) Salicylsäureethylester (SEE), sowie 382.50 g (523.97 mL; 3.78 mol) Triethylamin (TEA) in 1920 g (2206.90 mL; 20.84 mol) Toluol gelöst. Es werden bei Raumtemperatur unter Rühren via Tropftrichter 179.40 g (141.26 mL; 1.20 mol) Methyltrichlorosilan (MTS) so zudosiert, dass sich die Temperatur des Reaktionsgemisches stets unterhalb von 30°C befindet. Nach vollständiger Zugabe wird das Reaktionsgemisch für 3 Stunden bei Raumtemperatur und unter Stickstoff-Atmosphäre gerührt. Der entstandene Niederschlag wird inert abfiltriert und der Filterkuchen dreimal mit je 165 g (gesamt 570 mL; 5.43 mol) Toluol gewaschen. Dem Filtrat werden zehn Tropfen Cyclohexylamin zugegeben und im Anschluss unter vermindertem Druck vom Lösungsmittel befreit. Es werden so 629.1 g (1.16 mol) entsprechend einer Ausbeute von 97 % (bezogen auf Methyltrichlorosilan) des gewünschten Produkts Tris(ethylsalicylato)methylsilan (M(SEE)3) mit einem Cl⁻-Gehalt von 20 ppm erhalten.

Beispiel 2:

### Synthese von Tris(ethylsalicylato)propylsilan (P(SEE)3):

In einem 4 L 4-Halskolben mit KPG-Rührer, Rückflusskühler, Tropftrichter und Temperaturfühler werden unter Stickstoffatmosphäre 604.20 g (534.69 mL; 3.64 mol) Salicylsäureethylester (SEE), sowie 382.50 g (523.97 mL; 3.78 mol) Triethylamin (TEA) in 1920 g (2206.90 mL; 20.84 mol) Toluol gelöst. Es werden bei Raumtemperatur unter Rühren via Tropftrichter 213.04 g (179.78 mL; 1.20 mol) Propyltrichlorosilan (PTS) so zudosiert, dass sich die Temperatur des Reaktionsgemisches stets unterhalb von 30°C befindet. Nach vollständiger Zugabe wird das Reaktionsgemisch für 3 Stunden bei Raumtemperatur und unter Stickstoff-Atmosphäre gerührt. Der entstandene Niederschlag wird inert abfiltriert und der Filterkuchen dreimal mit je 165 g (gesamt 570 mL; 5.43 mol) Toluol gewaschen. Dem Filtrat werden zehn Tropfen Cyclohexylamin zugegeben und im Anschluss unter vermindertem Druck vom Lösungsmittel befreit. Es werden so 652.1 g (1.15 mol) entsprechend einer Ausbeute von 96 % (bezogen auf Propyltrichlorosilan) des gewünschten Produkts Tris(ethylsalicylato)propylsilan (P(SEE)3) mit einem Cl⁻-Gehalt von 20 ppm erhalten.

### Beispiel 3

### Synthese von Tris(ethylsalicylato)vinylsilan (V(SEE)3):

In einem 4 L 4-Halskolben mit KPG-Rührer, Rückflusskühler, Tropftrichter und Temperaturfühler werden unter Stickstoffatmosphäre 604.20 g (534.69 mL; 3.64 mol) Salicylsäureethylester (SEE), sowie 382.50 g (523.97 mL; 3.78 mol) Triethylamin (TEA) in 1920 g (2206.90 mL; 20.84 mol) Toluol gelöst. Es werden bei Raumtemperatur unter Rühren via Tropftrichter 193.79 g (152.59 mL; 1.20 mol) Vinyltrichlorosilan (VTS) so zudosiert, dass sich die Temperatur des Reaktionsgemisches stets unterhalb von 30°C befindet. Nach vollständiger Zugabe wird das Reaktionsgemisch für 3 Stunden bei Raumtemperatur und unter Stickstoff-Atmosphäre gerührt. Der entstandene Niederschlag wird inert abfiltriert und der Filterkuchen dreimal mit je 165 g (gesamt 570 mL; 5.43 mol) Toluol gewaschen. Dem Filtrat werden zehn Tropfen Cyclohexylamin zugegeben und im Anschluss unter vermindertem Druck vom Lösungsmittel befreit. Es werden so 627.72 g (1.14 mol) entsprechend einer Ausbeute von 95 % (bezogen auf Vinyltrichlorosilan) des gewünschten Produkts Tris(ethylsalicylato)vinylsilan (V(SEE)3) mit einem Cl⁻-Gehalt von 21 ppm erhalten.

In analoger Weise wurden weitere Silane mit Hydroxycarbonsäureestern als Abgangsgruppen unter Einsatz der entsprechenden Edukte, beispielsweise von Salicylsäure-2-ethylhexylester, dargestellt.

### Silikonkautschukmischungen (Dichtstoffformulierungen)

Ferner wurden Silikonkautschukmischungen (Dichtstoffformulierungen) enthaltend erfindungsgemäße Härter untersucht.

Die Produkteigenschaften Hautbildungszeit, Klebfreizeit, Durchhärtung und Reißdehnung der Silikonkautschukmischungen (Dichtstoffformulierungen) wurden nach Ausbringung der Dichtstoffe nach üblichen Verfahren bestimmt. So weit nicht anders angegeben wurden die Messungen bei 23°C und 50% Luftfeuchtigkeit durchgeführt.

Die Hautbildungszeit gibt dabei die Zeit an, zu der nach Ausbringung des Dichtstoffs an der Oberfläche eines Probenstranges eine vollständige Schicht aus verfestigtem Material (Haut) beobachtet wurde. Die Klebfreizeit gibt die Zeit an, zu der die Oberfläche eines Probenstranges keine Klebrigkeit mehr aufweist. Zur Bestimmung der vollständigen Aushärtung wird der Dichtstoff mit 9 mm Höhe auf eine Glasplatte aufgetragen und die Zeitdauer der Durchhärtung bis zur Glasplatte gemessen. Die Reißdehnung wurde gemäß DIN EN ISO 8339:2005-09 bestimmt.

### Beispiel 4:

### Dichtstoffrezeptur A

Es werden im Fall der Dichtstoffrezepturen A, B und C jeweils Silikonkautschukmischungen gemäß folgender Formulierung hergestellt:

| | |
|---|---|
| 580 g | alpha,omega-dihydroxyl-terminiertes Polydimethylsiloxan mit Viskosität 80.000 cSt |
| 260 g | Polydimethylsiloxan mit Viskosität 100 cSt |
| 1 g | Aminoalkyltrialkoxysilan |
| 91 g | Unbehandelte Pyrogene Kieselsäure |
| 0,2 g | Katalysator: Alkyl-zinn-carboxylat |
| 9 g | Haftvermittler: Aminoalkyltrialkoxysilan |

Härter A wurde zugegeben:

| | |
|---|---|
| 56 g | P(SEE)3 -Tris(ethylsalicylato)propylsilan |

Der resultierende Dichtstoff hat nach Ausbringung an Luft
- eine Hautbildungszeit von 2 min
- eine Klebfreizeit von 15 min
- ein transparentes Aussehen
- eine Shore-Härte A von 24

### Dichtstoffrezeptur B

Härter B wurde zugegeben:

| | |
|---|---|
| 56 g | P(SEHE)3-Tris(2-ethylhexylsalicylato)propylsilan |

Der resultierende Dichtstoff hat nach Ausbringung an Luft
- eine Hautbildungszeit von 2 min
- eine Klebfreizeit von 29 min
- ein transparentes Aussehen
- eine Shore-Härte A von 16

### Beispiel 4 (Stand der Technik; vgl. EP2030976 A1, Beispiel 7)

### Dichtstoffrezeptur C mit Lactathärtergemisch

Als Härter C wurde eine Mischung gemäß folgender Formulierung zugegeben:

| | |
|---|---|
| 20 g | Vinyl-tris(ethyllactato)silan |
| 20 g | Methyl-tris(ethyllactato)silan |

Der resultierende Dichtstoff hat nach Ausbringung an Luft
- eine Hautbildungszeit von 12 min
- eine Klebfreizeit von 60 min
- ein transparentes Aussehen
- eine Shore-Härte A von 22

### Beispiel 5:

Es wurde eine Siliconkautschukmischung gemäß der folgenden Zusammensetzung durch Mischen der Komponenten unter Vakuum hergestellt:

| | |
|---|---|
| 580 g | alpha,omega-dihydroxyl-terminiertes Polydimethylsiloxan mit Viskosität 80.000 cSt |
| 264 g | Polydimethylsiloxan mit Viskosität 100 cSt |
| 56 g | Härter: P(SEE)3 |
| 1 g | Aminoalkyltrialkoxysilan |
| 91 g | Unbehandelte Pyrogene Kieselsäure |
| 0,2 g | Katalysator: Alkyl-zinn-carboxylat |
| 9 g | Haftvermittler: Dimethylaminopropyltrimethoxysilan |

Der resultierende Dichtstoff war transparent und farblos und wies eine Hautbildungszeit von 3 Minuten, eine Klebfreizeit von 18 Minuten und eine vollständige Durchhärtung auf Glas (Dichtstoff 9 mm dick auf einer Glasplatte aufgetragen) nach 7 Tagen auf. Ferner wies der Dichtstoff einen angenehmen Geruch sowie eine gute Haftung auf Glas, Aluminium, PVC, Blech, Stahl, Holz lackiert, Holz lasiert, Polyamid und Al/Mg Legierung auf. Auch nach Lagerung des Dichtstoffes bei 60°C für 4 Wochen war der Dichtstoff stabil und farblos.

### Beispiel 6:

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 264 g | Polydimethylsiloxan mit Viskosität 100 cSt |
| 81 g | Härter: P(SEHE)3 |
| 1 g | Aminoalkyltrialkoxysilan |
| 91 g | Unbehandelte Pyrogene Kieselsäure |
| 0,2 g | Katalysator: Alkyl-zinn-carboxylat |
| 9 g | Haftvermittler: Dimethylaminopropyltrimethoxysilan |

Der resultierende Dichtstoff war transparent und farblos und wies eine Hautbildungszeit von 8 Minuten, eine Klebfreizeit von 17 Minuten und eine vollständige Durchhärtung auf Glas (Dichtstoff 9 mm dick auf einer Glasplatte aufgetragen) nach 7 Tagen auf. Ferner wies der Dichtstoff einen angenehmen Geruch sowie eine gute Haftung auf Glas, Aluminium, PVC, Blech, Stahl, Holz, Holz lackiert, Holz lasiert, Polyamid und Al/Mg Legierung auf. Auch nach Lagerung des Dichtstoffes bei 60°C für 4 Wochen war der Dichtstoff stabil und farblos.

### Beispiel 7

Es wurde eine Siliconkautschukmischung gemäß der folgenden Zusammensetzung durch Mischen der Komponenten unter Vakuum hergestellt:

| | |
|---|---|
| 504 g | alpha,omega-dihydroxyl-terminiertes Polydimethylsiloxan mit Viskosität 80.000 cSt |
| 328 g | Polydimethylsiloxan mit Viskosität 100 cSt |
| 65 g | Härter: P(SEE)3 |
| 1 g | Aminoalkyltrialkoxysilan |
| 85 g | Unbehandelte Pyrogene Kieselsäure |
| 1 g | Katalysator: 1:1 (w/w) Mischung aus Dialkylzinnoxid und Tetraalkoxysilan |
| 16 g | Haftvermittler: 1:1 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 13 Minuten, eine Klebfreizeit von 32 Minuten und eine vollständige Durchhärtung auf Glas (Dichtstoff 9 mm dick auf einer Glasplatte aufgetragen) nach 6 Tagen auf. Die Reißdehnung wurde zu 340% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

Somit führt der erfindungsgemäße Härter zu Dichtstoffen mit guten Eigenschaften. Insbesondere führt der Härter zu einem Dichtstoff, der bei Ausbringungen keine Geruchsbelastung verursacht, eine gute Reißdehnung aufweist und auch bei andauernder Lagerung bei erhöhter Temperatur stabil bleibt und sich nicht verfärbt.

### Beispiel 8 (Härter enthaltend eine Mischung von Silanen)

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und Tris(trialkoxysilylalkyl)dialkylendiharnstoff |

Der resultierende Dichtstoff war transparent und farblos und wies eine Hautbildungszeit von 15 Minuten, eine Klebfreizeit von 60 Minuten und eine vollständige Durchhärtung auf Glas (Dichtstoff 9 mm dick auf einer Glasplatte aufgetragen) nach 6 Tagen auf. Die Reißdehnung wurde zu 370% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

Somit führen erfindungsgemäße Härter enthaltend eine Mischung von Silanen zu Dichtstoffen mit guten Eigenschaften. Insbesondere führen erfindungsgemäße Härter enthaltend eine Mischung von Silanen zu einem Dichtstoff, der bei Ausbringungen keine Geruchsbelastung verursacht, eine gute Reißdehnung aufweist und auch bei andauernder Lagerung bei erhöhter Temperatur stabil bleibt und sich nicht verfärbt.

### Beispiel 9 (Härter enthaltend eine Mischung von Silanen)

Es wurde eine Siliconkautschukmischung gemäß der folgenden Zusammensetzung durch Mischen der Komponenten unter Vakuum hergestellt:

| | |
|---|---|
| 550 g | alpha,omega-dihydroxyl-terminiertes Polydimethylsiloxan mit Viskosität 80.000 cSt |
| 268 g | Polydimethylsiloxan mit Viskosität 100 cSt |
| 40 g | Härter 1: Tris(2-ethylhexylsalicylato)methylsilan |
| 40 g | Härter 2: Tris(2-ethylhexylsalicylato)propylsilan |
| 1 g | Aminoalkyltrialkoxysilan |
| 85 g | Unbehandelte Pyrogene Kieselsäure |
| 0,7 g | Katalysator: 1:1 (w/w) Mischung aus Dialkylzinnoxid und Tetraalkoxysilan |
| 16 g | Haftvermittler: 1:3 (w/w) Mischung aus Dialkylaminoalkyltrialkoxysilan und Tris(trialkoxysilylalkyl)isocyanurat |

Der resultierende Dichtstoff war transparent und farblos und wies eine Hautbildungszeit von 16 Minuten, eine Klebfreizeit von 38 Minuten und eine vollständige Durchhärtung auf Glas (Dichtstoff 9 mm dick auf einer Glasplatte aufgetragen) nach 7 Tagen auf. Die Reißdehnung wurde zu 310% bestimmt. Ferner wies der Dichtstoff einen angenehmen Geruch sowie eine gute Haftung auf Glas, Aluminium, PVC, Blech, Stahl und Holz auf. Auch nach Lagerung des Dichtstoffes bei 60°C für 4 Wochen war der Dichtstoff stabil und farblos.

### Beispiel 10 (Härter enthaltend eine Mischung von Silanen):

Es wurde eine Siliconkautschukmischung gemäß der folgenden Zusammensetzung durch Mischen der Komponenten unter Vakuum hergestellt:

| | |
|---|---|
| 540 g | alpha,omega-dihydroxyl-terminiertes Polydimethylsiloxan mit Viskosität 80.000 cSt |
| 310 g | Polydimethylsiloxan mit Viskosität 100 cSt |
| 28 g | Härter 1: Methyl-tris(diethyllactamido)silan |
| 20 g | Härter 2: Vinyl-tris(diethyllactamido)silan |
| 1 g | Aminoalkyltrialkoxysilan |
| 96 g | Unbehandelte Pyrogene Kieselsäure |
| 1,2 g | Katalysator: 1:1 (w/w) Mischung aus Dialkylzinnoxid und Tetraalkoxysilan |
| 10 g | H aftverm ittler: Dialkylaminoalkyltrialkoxysilan |

Der resultierende Dichtstoff war transparent und farblos und wies eine Hautbildungszeit von 10 Minuten, eine Klebfreizeit von 50 Minuten und eine vollständige Durchhärtung auf Glas (Dichtstoff 9 mm dick auf einer Glasplatte aufgetragen) nach 7 Tagen auf. Ferner war der Dichtstoff geruchlos und zeigte eine gute Haftung auf Glas, Aluminium, PVC, Blech, Stahl Holz, Holz lackiert, Holz lasiert, Polyamid und Al/Mg-Legierung auf. Auch nach Lagerung des Dichtstoffes bei 60°C für 4 Wochen war der Dichtstoff stabil und farblos.

Somit führen erfindungsgemäße Härter enthaltend eine Mischung von Silanen zu Dichtstoffen mit guten Eigenschaften. Insbesondere führen erfindungsgemäße Härter enthaltend eine Mischung von Silanen zu einem Dichtstoff, der bei Ausbringungen keine Geruchsbelastung verursacht, eine gute Reißdehnung aufweist und auch bei andauernder Lagerung bei erhöhter Temperatur stabil bleibt und sich nicht verfärbt.

Somit eignen sich die erfindungsgemäßen Härter gut als Härter in Siliconkautschukzusammensetzungen (Dichtstoffen).

## Patentansprüche

1. Härter für Silikonkautschukmassen, enthaltend eine Verbindung mit der allgemeinen Strukturformel R¹ₘSi(R)₄₋ₘ,
wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist, wobei
(a) R ein Hydroxycarbonsäureesterrest mit der allgemeinen Strukturformel (II): 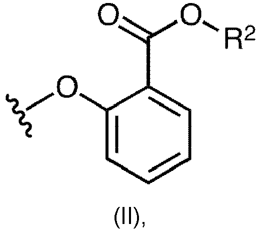 ist
wobei R² eine optional substituierte, geradkettige oder verzweigte C1- bis C16-Alkylgruppe, eine C4- bis C14-Cycloalkylgruppe oder eine C5- bis C15-Aralkylgruppe bedeutet
oder Oligomere oder Polymere des Härters, oder
(b) die allgemeine Strukturformel R¹ₘSi(R)₄₋ₘ, 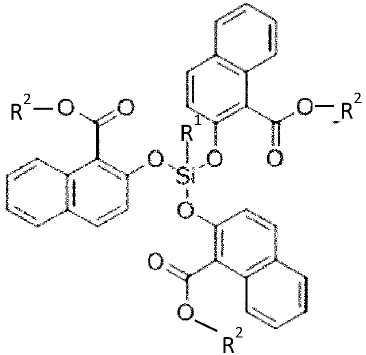 ist,
oder Oligomere oder Polymere des Härters, worin R² wie oben definiert ist, oder
(c) R ein Hydroxycarbonsäureesterrest mit der allgemeinen Strukturformel (I): 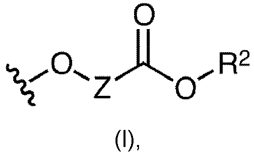 ist,
wobei
R² eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
Z
-(CR³R⁴)ₙ- ist, wobei n eine ganze Zahl von 2 bis 10 ist,
oder
Z ein optional substituiertes gesättigtes oder teilweise ungesättigtes cyclisches Ringsystem mit 4 bis 14 C-Atomen bedeutet,
jeder R³ und R⁴ unabhängig voneinander H oder eine optional substituierte, geradkettige oder verzweigte C1- bis C16 Alkylgruppe oder eine C4- bis C14-Arylgruppe bedeuten, und
n eine ganze Zahl von 2 bis 10 ist
oder Oligomere oder Polymere des Härters.

2. Härter nach Anspruch 1, **dadurch gekennzeichnet, dass** n eine ganze Zahl von 2 bis 5 ist.

3. Härter nach einem der vorstehenden Ansprüche, **dadurch gekennzeichnet, dass** jeder R³ und R⁴ unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe, bedeuten.

4. Härter nach einem der vorstehenden Ansprüche, **dadurch gekennzeichnet, dass** jeder R³ und R⁴ unabhängig voneinander ausgewählt sind aus der Gruppe bestehend aus H, Methyl-, Ethyl-, Propyl-, Butyl-, n-Butyl-, sec-Butyl-, iso-Butyl- und tert-Butyl-.

5. Härter nach einem der vorstehenden Ansprüche, **dadurch gekennzeichnet, dass** R² eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloakylgruppe, eine C5- bis C11-Aralkylgruppe oder eine C4- bis C10-Arylgruppe bedeutet.

6. Härter nach einem der vorstehenden Ansprüche, **dadurch gekennzeichnet, dass** R² ausgewählt ist aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Phenyl-, Naphthyl- und Cyclohexyl.

7. Härter nach einem der vorstehenden Ansprüche, **dadurch gekennzeichnet, dass** Z eine optional substituierte aromatische Gruppe mit 4 bis 14 C-Atomen ist, wobei die aromatische Gruppe kein Benzolrest ist.

8. Härter nach Anspruch 7, **dadurch gekennzeichnet, dass** R² eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloakylgruppe oder eine C5- bis C11-Aralkylgruppe bedeutet.

9. Härter nach einem der vorstehenden Ansprüche 1 oder 8, **dadurch gekennzeichnet, dass** R² ausgewählt ist aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Naphthyl- und Cyclohexyl.

10. Härter nach einem der vorstehenden Ansprüche 1 bis 9, **dadurch gekennzeichnet, dass** R² ausgewählt ist aus der Gruppe bestehend aus Methyl-, Ethyl-, Isopropyl-, n-Butyl- und 2-Ethylhexyl-, insbesondere aus der Gruppe bestehend aus Ethyl- und 2-Ethylhexyl

11. Härter nach einem vorstehenden der Ansprüche, **dadurch gekennzeichnet, dass** jeder R¹ unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe, oder eine optional substituierte C4- bis C10-Arylgruppe bedeutet.

12. Härter nach einem der vorstehenden Ansprüche, **dadurch gekennzeichnet, dass** jeder R¹ unabhängig voneinander Methyl-, Ethyl-, Propyl-, Vinyl-, Phenyl- oder Allylbedeutet.

13. Härter nach Anspruch 1, **dadurch gekennzeichnet, dass** R² eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cycloakylgruppe, eine C5- bis C10-Arylgruppe oder eine C5- bis C11-Aralkylgruppe bedeutet.

14. Härter nach einem der vorstehenden Ansprüche 1 oder 13, **dadurch gekennzeichnet, dass** R² ausgewählt ist aus der Gruppe bestehend aus Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Nonyl-, Decyl-, Undecyl-, Dodecyl-, Ethylhexyl-, 2-Ethylhexyl-, Benzyl-, Phenyl-, Naphthyl- und Cyclohexyl.

15. Härter nach einem der vorstehenden Ansprüche, **dadurch gekennzeichnet, dass** die allgemeine Strukturformel R¹ₘSi(R)₄₋ₘ, 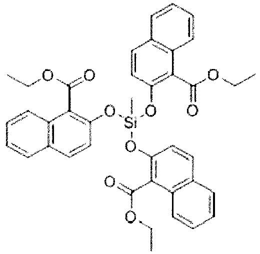 ist, oder Oligomere oder Polymere des Härters.

16. Härter für Silikonkautschukmassen nach Anspruch 1, enthaltend mindestens eine Verbindung ausgewählt aus der Gruppe Tris(2-ethylhexylsalicylato)ethylsilan, Tris(2-ethylhexylsalicylato)methylsilan, Tris(2-ethylhexylsalicylato)phenylsilan, Tris(2-ethylhexylsalicylato)propylsilan, Tris(2-ethylhexylsalicylato)vinylsilan Tris(ethylhexylsalicylato)ethylsilan, Tris(ethylhexylsalicylato)methylsilan, Tris(ethylhexylsalicylato)phenylsilan, Tris(ethylhexylsalicylato)propylsilan, Tris(ethylhexylsalicylato)vinylsilan, Tris(ethylsalicylato)ethylsilan, Tris(ethylsalicylato)methylsilan, Tris(ethylsalicylato)phenylsilan, Tris(ethylsalicylato)propylsilan, Tris(ethylsalicylato)vinylsilan, Tris(isopropylsalicylato)ethylsilan, Tris(isopropylsalicylato)phenylsilan, Tris(isopropylsalicylato)propylsilan, Tris(isopropylsalicylato)vinylsilan, Tris(methylsalicylato)ethylsilan, Tris(methylsalicylato)methylsilan, Tris(methylsalicylato)phenylsilan, Tris(methylsalicylato)vinylsilan, Tetra(2-ethylhexylsalicylato)silan, Tetra(ethylhexylsalicylato)silan, Tetra(ethylsalicylato)silan, Tetra(isopropylsalicylato)silan, Tetra(methylsalicylato)silan
oder Oligomere oder Polymere des Härters
oder Mischungen davon.

17. Härter für Silikonkautschukmassen nach Anspruch 1, enthaltend eine Verbindung mit der Strukturformel: 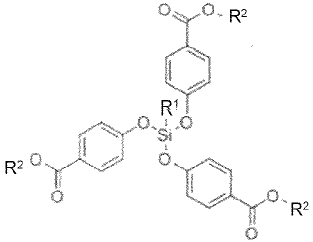
wobei R¹ Vinyl und R² Ethylhexyl ist,
oder Oligomere oder Polymere des Härters.

18. Härter für Silikonkautschukmassen nach Anspruch 1, enthaltend eine Verbindung mit der allgemeinen Strukturformel R¹ₘSi(R)₄₋ₘ,
wobei
jeder R1 unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
R ein Hydroxycarbonsäureesterrest mit der allgemeinen Strukturformel (I): 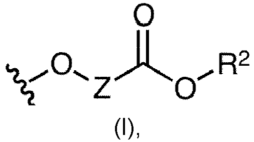 ist,
wobei
R2 eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
Z eine optional substituierte aromatische Gruppe mit 4 bis 14 C-Atomen oder -(CR3R4)ₙ- oder ein optional substituiertes gesättigtes oder teilweise ungesättigtes cyclisches Ringsystem mit 4 bis 14 C-Atomen bedeutet,
jeder R3 und R4 unabhängig voneinander H oder eine optional substituierte, geradkettige oder verzweigte C1- bis C16 Alkylgruppe oder eine C4- bis C14-Arylgruppe bedeuten, und
n eine ganze Zahl von 1 bis 10 ist
oder Oligomere oder Polymere des Härters,
wobei
wenn n 1 ist, R3 und R4 nicht H bedeuten und R3 nicht H und R4 nicht Methyl bedeuten und R3 nicht Methyl und R4 nicht H bedeuten,
**dadurch gekennzeichnet, dass** der Härter zusätzlich eine Verbindung mit der allgemeinen Strukturformel R⁵ₒSi(R)₄₋ₒ enthält, wobei R⁵ eine optional substituierte, geradkettige oder verzweigte C1- bis C16-Alkylgruppe, insbesondere eine optional substituierte, geradkettige oder verzweigte C1- bis C12- oder eine C1- bis C8-Alkylgruppe oder eine Methyl- oder Propylgruppe, oder eine optional substituierte, geradkettige oder verzweigte C2- bis C16-Alkenylgruppe, insbesondere eine optional substituierte, geradkettige oder verzweigte C2- bis C12- oder eine C2- bis C8-Alkenylgruppe oder eine Vinylgruppe oder eine optional substituierte C4- bis C14-Arylgruppe oder eine Phenylgruppe ist und R gemäß einem der Ansprüche 1 bis 17 definiert ist und o eine ganze Zahl von 0 bis 2 ist und wobei R¹ₘSi(R)₄₋ₘ und R⁵ₒSi(R)₄₋ₒ nicht gleich sein können.

19. Härter erhältlich durch Vermischen mindestens einer Verbindung mit der allgemeinen Strukturformel R¹ₘSi(R)₄₋ₘ gemäß Anspruch 18 mit einer Verbindung mit der allgemeinen Strukturformel R⁵ₒSi(R)₄₋ₒ, wobei jeder R¹ und jeder R⁵ unabhängig voneinander gemäß einem der Ansprüche 1, 11, 12, 15, 16, 17 oder 18 definiert sind und jeder R unabhängig voneinander gemäß einem der Ansprüche 1, 3, 4, 5, 6, 7, 8, 9, 10, 13, 14, 15, 16, 17 oder 18 definiert ist und m und o unabhängig voneinander eine ganze Zahl von 0 bis 2 sind und wobei R¹ₘSi(R)₄₋ₘ und R⁵ₒSi(R)₄₋ₒ nicht gleich sein können.

20. Verfahren zur Herstellung eines Härters nach einem der Ansprüche 1 bis 19, umfassend das Umsetzen einer Verbindung mit der allgemeinen Formel R¹ₘSiX₄₋ₘ mit (4-m) Äquivalenten mindestens eines Hydroxycarbonsäureesters mit der allgemeinen Strukturformel (III), 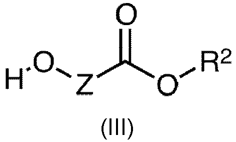 wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
X ausgewählt ist aus der Gruppe bestehend aus einem Alkoxyrest mit mindestens einem Kohlenstoffatom und einem Halogenatom, insbesondere einem Chloratom,
R² eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
Z eine optional substituierte aromatische Gruppe mit 4 bis 14 C-Atomen oder -(CR³R⁴)ₙ- oder ein gesättigtes oder teilweise ungesättigtes cyclisches Ringsystem mit 4 bis 14 C-Atomen bedeutet,
jeder R³ und R⁴ unabhängig voneinander H oder eine optional substituierte, geradkettige oder verzweigte C1- bis C16- Alkylgruppe oder eine C4- bis C14-Arylgruppe bedeuten, und
n eine ganze Zahl von 2 bis 10, insbesondere von 2 bis 5 ist.

21. Verfahren nach Anspruch 20, **dadurch gekennzeichnet, dass** jeder R¹ unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C1- bis C8- Alkenylgruppe, oder eine optional substituierte C4- bis C10-Arylgruppe bedeutet.

22. Verfahren nach einem der Ansprüche 20 oder 21, **dadurch gekennzeichnet, dass** jeder R³ und R⁴ unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe, bedeuten.

23. Verfahren nach einem der Ansprüche 20 bis 22, **dadurch gekennzeichnet, dass** R² eine optional substituierte, geradkettige oder verzweigte C1- bis C12-Alkylgruppe, insbesondere eine optional substituierte, geradkettige oder verzweigte C1- bis C8-Alkylgruppe, eine C4- bis C10-Cyclohexylgruppe, eine C5- bis C11-Aralkylgruppe oder eine C4- bis C10-Arylgruppe bedeutet.

24. Verfahren nach einem der Ansprüche 20 bis 23, **dadurch gekennzeichnet, dass** jeder R¹ unabhängig voneinander Methyl-, Ethyl-, Propyl-, Vinyl-, Phenyl- oder Allylbedeutet und/oder der Hydroxycarbonsäureester durch eines oder mehrere Merkmale der Ansprüche 2 bis 10 charakterisiert ist.

25. Verfahren nach einem der Ansprüche 20 bis 24, **dadurch gekennzeichnet, dass** Z eine optional substituierte aromatische Gruppe mit 6 C-Atomen, insbesondere ein divalenter Benzolrest, ist.

26. Härter erhältlich durch ein Verfahren gemäß einem der Ansprüche 20 bis 25, wobei wenn Z ein Benzolring ist, Z ein Hydroxycarbonsäureesterrest mit der allgemeinen Strukturformel (II) ist und R² keine C4- bis C14-Arylgruppe ist.

27. Verwendung eines Härters für Silikonkautschukmassen, wobei der Härter eine Verbindung mit der allgemeinen Strukturformel R¹ₘSi(R)₄₋ₘ enthält,
wobei
jeder R¹ unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe bedeutet,
m eine ganze Zahl von 0 bis 2 ist,
R ein Hydroxycarbonsäureesterrest mit der allgemeinen Strukturformel (I): 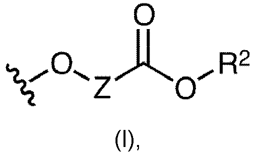 ist,
wobei
R² eine optional substituierte, geradkettige oder verzweigte C1- bis C16-Alkylgruppe, eine C4- bis C14-Cycloalkylgruppe, eine C5- bis C15-Aralkylgruppe oder eine C4- bis C14-Arylgruppe bedeutet,
Z
(A) eine optional substituierte aromatische Gruppe mit 4 bis 14 C-Atomen, wobei
wenn m = 2, m = 1 oder m = 0 ist, die C6-Arylgruppe nicht 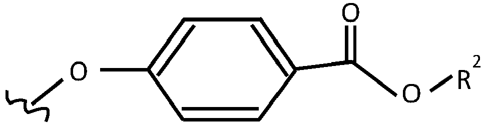 bedeutet
und wenn m = 2 oder m = 0 und die C6-Arylgruppe 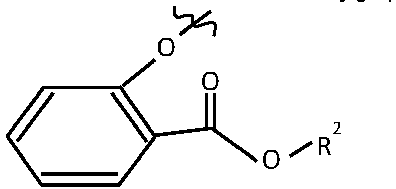 ist, R² nicht Phenyl bedeutet;
und wenn die C6-Arylgruppe 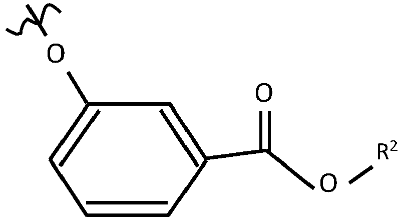
ist, R² nicht Ethyl bedeutet oder
(B) -(CR³R⁴)ₙ-, wobei n eine ganze Zahl von 2 bis 10 ist, oder
(C) ein optional substituiertes gesättigtes oder teilweise ungesättigtes cyclisches Ringsystem mit 4 bis 14 C-Atomen bedeutet,
jeder R³ und R⁴ unabhängig voneinander H oder eine optional substituierte, geradkettige oder verzweigte C1- bis C16 Alkylgruppe oder eine C4- bis C14-Arylgruppe bedeuten, und
n eine ganze Zahl von 2 bis 10 ist
oder Oligomere oder Polymere des Härters.

28. Verwendung eines Härters nach einem der Ansprüche 1 bis 19 oder 26 zum Härten einer Silikonkautschukmasse.

29. Zusammensetzung enthaltend einen Härter nach einem der Ansprüche 1 bis 19 oder 26 und eine Organosiliconverbindung.

30. Zusammensetzung nach Anspruch 29, **dadurch gekennzeichnet, dass** die Organosiliconverbindung eine alpha,omega-dihydroxyl-terminierte Polyorganosiloxanverbindung ist, insbesondere ein alpha,omega-dihydroxyl-terminiertes Polydialkylsiloxan.

31. Zusammensetzung, erhältlich durch Vermischen mindestens eines Härters enthaltend eine Verbindung mit der allgemeinen Strukturformel R¹ₘSi(R)₄₋ₘ, wobei jeder R¹ und jeder R unabhängig voneinander gemäß einem der Ansprüche 1 bis 19 definiert sind und m eine ganze Zahl von 0 bis 2 ist oder der Härter ein Härter gemäß Anspruch 26 ist, mit mindestens einem Haftmittel (Haftvermittler) und mindestens einer weiteren Komponente ausgewählt aus der Gruppe bestehend aus Thixotropiermittel, Organosiliconverbindung, Füllstoff, Farbmittel, Weichmacher, Benetzungsmittel und Katalysator.

32. Verwendung einer Zusammensetzung nach einem der Ansprüche 26 bis 31 als Dichtungsmittel, Klebstoff, Vergussmasse und/oder Beschichtungsmittel.

## Claims

1. Curing agent for silicone rubber masses, containing a compound with the general structural formula R¹ₘSi(R)₄₋ₘ,
wherein
each R¹ independently represents an optionally substituted straight-chain or branched C1 to C16 alkyl group, an optionally substituted straight-chain or branched chain C2 to C16 alkenyl group or an optionally substituted C4 to C14 aryl group,
m is an integer from 0 to 2, wherein
(a) R is a hydroxycarboxylic acid ester residue having the general structural formula (II): 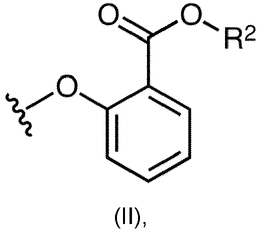 wherein R² represents an optionally substituted straight-chain or branched C1 to C16 alkyl group, a C4 to C14 cycloalkyl group or a C5 to C15 aralkyl group or oligomers or polymers of the curing agent, or
(b) the general structural formula R¹ₘSi(R)₄₋ₘ is 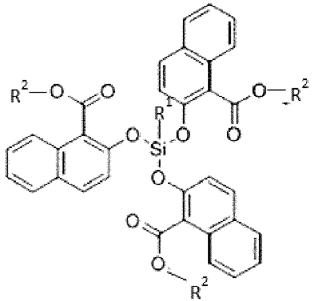 or oligomers or polymers of the curing agent, wherein R² is as defined above, or
(c) R is a hydroxycarboxylic acid ester residue having the general structural formula (I) 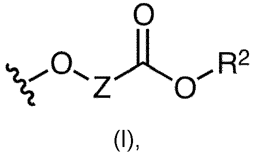
wherein R² represents an optionally substituted, straight-chain or branched C1 to C16 alkyl group, a C4 to C14 cycloalkyl group, a C5 to C15 aralkyl group or a C4 to C14 aryl group,
Z is
-(CR³R⁴)ₙ-, wherein n is an integer from 2 to 10,
or
Z is an optionally substituted saturated or partially unsaturated cyclic ring system with 4 to 14 C atoms,
each of R³ and R⁴ is independently H or an optionally substituted straight or branched C1 to C16 alkyl group or a C4 to C14 aryl group, and
n is an integer from 2 to 10
or oligomers or polymers of the curing agent.

2. Curing agent according to claim 1, **characterized in that** n is an integer from 2 to 5.

3. Curing agent according to any of the preceding claims, **characterized in that** each of R³ and R⁴ is independently H or an optionally substituted, straight-chain or branched C1 to C12 alkyl group, in particular an optionally substituted, straight-chain or branched C1 to C8 alkyl group.

4. Curing agent according to any of the preceding claims, **characterized in that** each R³ and R⁴ are independently selected from the group consisting of H, methyl, ethyl, propyl, butyl, n-butyl, sec-butyl, iso-butyl and tert-butyl.

5. Curing agent according to one of the preceding claims, **characterized in that** R² is an optionally substituted, straight-chain or branched C1 to C12 alkyl group, in particular an optionally substituted, straight-chain or branched C1 to C8 alkyl group, a C4 to C10 cycloakyl group, a C5 to C11 aralkyl group or a C4 to C10 aryl group.

6. Curing agent according to any of the preceding claims, **characterized in that** R² is selected from the group consisting of methyl, ethyl, propyl, isopropyl, butyl, n-butyl, sec-butyl, iso-butyl, tert-butyl, pentyl, n-pentyl, sec-pentyl, 3-pentyl, 2-methylbutyl, iso-pentyl, 3-methylbut-2-yl, 2-methylbut-2-yl, neopentyl, hexyl, heptyl, octyl, nonyl, decyl, undecyl, dodecyl, ethylhexyl, 2-ethylhexyl, benzyl, phenyl, naphthyl and cyclohexyl.

7. Curing agent according to any of the preceding claims, **characterized in that** Z is an optionally substituted aromatic group having 4 to 14 C atoms, the aromatic group not being a benzene residue.

8. Curing agent according to claim 7, **characterized in that** R² is an optionally substituted, straight-chain or branched C1 to C12 alkyl group, in particular an optionally substituted, straight-chain or branched C1 to C8 alkyl group, a C4 to C10 cycloakyl group or a C5 to C11 aralkyl group.

9. Curing agent according to any of claims 1 or 8, **characterized in that** R² is selected from the group consisting of methyl, ethyl, propyl, isopropyl, butyl, n-butyl, sec-butyl, iso-butyl, tert-butyl, pentyl, n-pentyl, sec-pentyl, 3-pentyl, 2-methylbutyl, iso-pentyl, 3-methylbut-2-yl, 2-methylbut-2-yl, neopentyl, hexyl, heptyl, octyl, nonyl, decyl, undecyl, dodecyl, ethylhexyl, 2-ethylhexyl, benzyl, naphthyl and cyclohexyl.

10. Curing agent according to any of claims 1 to 9, **characterized in that** R² is selected from the group consisting of methyl, ethyl, isopropyl, n-butyl and 2-ethylhexyl, in particular from the group consisting of ethyl and 2-ethylhexyl.

11. Curing agent according to any of the preceding claims, **characterized in that** each R¹ independently represents an optionally substituted straight-chain or branched C1 to C12 alkyl group, in particular an optionally substituted straight-chain or branched C1 to C8 alkyl group, or an optionally substituted straight-chain or branched C2 to C12 alkenyl group, in particular an optionally substituted straight-chain or branched C2 to C8 alkenyl group, or an optionally substituted C4 to C10 aryl group.

12. Curing agent according to any of the preceding claims, **characterized in that** each R¹ is independently methyl, ethyl, propyl, vinyl, phenyl or allyl.

13. Curing agent according to claim 1, **characterized in that** R² is an optionally substituted, straight-chain or branched C1 to C12 alkyl group, in particular an optionally substituted, straight-chain or branched C1 to C8 alkyl group, a C4 to C10 cycloakyl group, a C5 to C10 aryl group or a C5 to C11 aralkyl group.

14. Curing agent according to one of the claims 1 or 13, **characterized in that** R² is selected from the group consisting of methyl, ethyl, propyl, isopropyl, butyl, n-butyl, sec-butyl, iso-butyl, tert-butyl, pentyl, n-pentyl, sec-pentyl, 3-pentyl, 2-methylbutyl, iso-pentyl, 3-methylbut-2-yl, 2-methylbut-2-yl, neopentyl, hexyl, heptyl, octyl, nonyl, decyl, undecyl, dodecyl, ethylhexyl, 2-ethylhexyl, benzyl, phenyl, naphthyl and cyclohexyl

15. Curing agent according to one of the proceeding claims, **characterized in that** the general structural formula R¹ₘSi(R)₄₋ₘ is 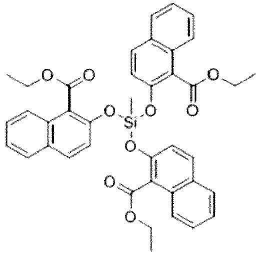 or oligomers or polymers of the curing agent.

16. Curing agent for silicone rubber compositions, containing at least one compound selected from the group
tris(2-ethylhexylsalicylato)ethylsilane, tris(2-ethylhexylsalicylato)methylsilane, tris(2-ethylhexylsalicylato)phenylsilane, tris(2-ethylhexylsalicylato)propylsilane, tris(2-ethylhexylsalicylato)vinylsilane tris(ethylhexylsalicylato)ethylsilane, tris(ethylhexylsalicylato)methylsilane, tris(ethylhexylsalicylato)phenylsilane, tris(ethylhexylsalicylato)propylsilane, tris(ethylhexylsalicylato)vinylsilane, tris(ethylsalicylato)ethylsilane, tris(ethylsalicylato)methylsilane, tris(ethylsalicylato)phenylsilane, tris(ethylsalicylato)propylsilane, tris(ethylsalicylato)vinylsilane, tris(isopropylsalicylato)ethylsilane, tris(isopropylsalicylato)phenylsilane, tris(isopropylsalicylato)propylsilane, tris(isopropylsalicylato)vinylsilane, tris(methylsalicylato)ethylsilane, tris(methylsalicylato)methylsilane, tris(methylsalicylato)phenylsilane, tris(methylsalicylato)vinylsilane, tetra(2-ethylhexylsalicylato)silane, tetra(ethylhexylsalicylato)silane, tetra(ethylsalicylato)silane, tetra(isopropylsalicylato)silane, tetra(methylsalicylato)silane or oligomers or polymers of the curing agent or mixtures thereof.

17. Curing agent for silicone rubber masses containing a compound having the structural formula 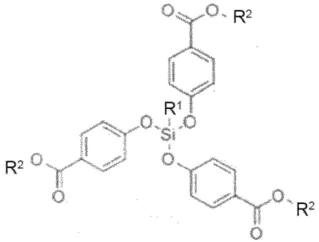
wherein R¹ is vinyl and R² is ethylhexyl,
or oligomers or polymers of the curing agent.

18. Curing agent for silicone rubber compositions, containing a compound with the general structural formula R¹ₘSi(R)₄₋ₘ,
wherein
each R¹ independently represents an optionally substituted straight or branched chain C1 to C16 alkyl group, an optionally substituted straight or branched chain C2 to C16 alkenyl group or an optionally substituted C4 to C14 aryl group,
m is an integer from 0 to 2,
R is a hydroxycarboxylic acid ester residue having the general structural formula (I): 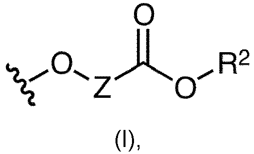 wherein
R² represents an optionally substituted, straight-chain or branched C1 to C16 alkyl group, a C4 to C14 cycloalkyl group, a C5 to C15 aralkyl group or a C4 to C14 aryl group,
Z represents an optionally substituted aromatic group having 4 to 14 C atoms or -(CR³R⁴)ₙ- or an optionally substituted saturated or partially unsaturated cyclic ring system having 4 to 14 C atoms,
each of R³ and R⁴ is independently H or an optionally substituted straight-chain or branched C1 to C16 alkyl group or a C4 to C14 aryl group, and
n is an integer from 1 to 10
or oligomers or polymers of the curing agent,
wherein
when n is 1, R³ and R⁴ are not H and R³ is not H and R⁴ is not methyl and R³ is not methyl and R⁴ is not H,
**characterized in that** the curing agent additionally contains a compound with the general structural formula R⁵ₒSi(R)₄₋ₒ, wherein R⁵ is an optionally substituted, straight-chain or branched C1 to C16 alkyl group, in particular an optionally substituted, straight-chain or branched C1 to C12 or a C1 to C8 alkyl group or a methyl or propyl group, or an optionally substituted is a straight-chain or branched C2- to C16-alkenyl group, in particular an optionally substituted, straight-chain or branched C2-to C12- or a C2- to C8-alkenyl group or a vinyl group or an optionally substituted C4-to C14-aryl group or a phenyl group and R is defined according to one of claims 1 to 17 and o is an integer from 0 to 2 and wherein R¹ₘSi(R)₄₋ₘ and
R⁵ₒSi(R)₄₋ₒ cannot be the same.

19. Curing agent obtainable by mixing at least one compound having the general structural formula R¹ₘSi(R)₄₋ₘ according to claim 18 with a compound having the general structural formula R⁵ₒSi(R)₄₋ₒ, wherein each R¹ and each R⁵ are independently selected according to any one of claims 1, 11, 12, 15, 16, 17 or 18 and each R is independently defined according to any one of Claims 1, 3, 4, 5, 6, 7, 8, 9, 10, 13, 14, 15, 16, 17 or 18 and m and o are independently an integer from 0 to 2 and wherein R¹ₘSi(R)₄₋ₘ and R⁵ₒSi(R)₄₋ₒ cannot be the same.

20. Process for preparing a curing agent according to any of claims 1 to 19, which comprises reacting a compound having the general formula R¹ₘSiX₄₋ₘ with (4-m) equivalents of at least one hydroxycarboxylic acid ester having the general structural formula (III), 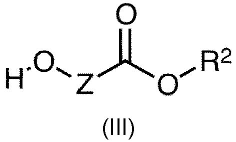 wherein
each R¹ independently represents an optionally substituted straight or branched chain C1 to C16 alkyl group, an optionally substituted straight or branched chain C2 to C16 alkenyl group or an optionally substituted C4 to C14 aryl group,
m is an integer from 0 to 2,
X is selected from the group consisting of an alkoxy radical containing at least one carbon atom and a halogen atom, in particular a chlorine atom, R² represents an optionally substituted, straight-chain or branched C1 to C16 alkyl group, a C4 to C14 cycloalkyl group, a C5 to C15 aralkyl group or a C4 to C14 aryl group
Z represents an optionally substituted aromatic group with 4 to 14 C atoms or -(CR³R⁴)ₙ- or a saturated or partially unsaturated cyclic ring system with 4 to 14 C atoms,
each of R³ and R⁴ is independently H or an optionally substituted straight-chain or branched C1 to C16 alkyl group or a C4 to C14 aryl group, and
n is an integer from 2 to 10, in particular from 2 to 5.

21. Process according to claim 20, **characterized in that**
each R¹ independently represents an optionally substituted straight-chain or branched C1 to C12 alkyl group, in particular an optionally substituted straight-chain or branched C1 to C8 alkyl group, or an optionally substituted straight-chain or branched C2 to C12 alkenyl group, in particular an optionally substituted straight-chain or branched C1 to C8 alkenyl group, or an optionally substituted C4 to C10 aryl group.

22. Process according to any of claims 20 or 21, **characterized in that** each of R³ and R⁴ independently represents H or an optionally substituted straight-chain or branched C1 to C12 alkyl group, in particular an optionally substituted straight-chain or branched C1 to C8 alkyl group.

23. Process according to any one of claims 20 to 22, **characterized in that** R² is an optionally substituted, straight-chain or branched C1 to C12 alkyl group, in particular an optionally substituted, straight-chain or branched C1 to C8 alkyl group, a C4 to C10 cyclohexyl group, a C5 to C11 aralkyl group or a C4 to C10 aryl group.

24. Process according to any of claims 20 to 23, **characterized in that** each R¹ is independently methyl, ethyl, propyl, vinyl, phenyl or allyl and/or the hydroxycarboxylic acid ester is **characterized by** one or more features of Claims 2 to 10.

25. Process according to any of claims 20 to 24, **characterized in that** Z is an optionally substituted aromatic group having 6 C atoms, in particular a divalent benzene residue.

26. Curing agent obtainable by a process according to any of claims 20 to 25, wherein when Z is a benzene ring, Z is a hydroxycarboxylic acid ester radical having the general structural formula (II) and R² is not a C4 to C14 aryl group.

27. Use of a curing agent for silicone rubber masses, wherein the curing agent contains a compound with the general structural formula R¹ₘSi(R)₄₋ₘ,
wherein
each R¹ independently represents an optionally substituted straight-chain or branched C1 to C16 alkyl group, an optionally substituted straight-chain or branched C2 to C16 alkenyl group or an optionally substituted C4 to C14 aryl group,
m is an integer from 0 to 2,
R is a hydroxycarboxylic acid ester radical having the general structural formula (I): 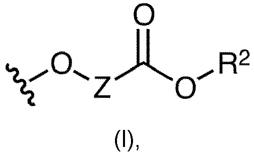
wherein R² represents an optionally substituted, straight-chain or branched C1 to C16 alkyl group, a C4 to C14 cycloalkyl group, a C5 to C15 aralkyl group or a C4 to C14 aryl group,
Z is
(A) an optionally substituted aromatic group having 4 to 14 C atoms, wherein
if m = 2, m = 1 or m = 0, the C6 aryl group is not 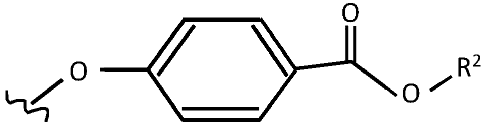 and when m = 2 or m = 0 and the C6 aryl group is 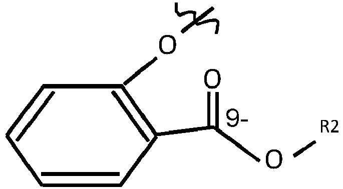
R² is not phenyl;
and when the C6 aryl group is 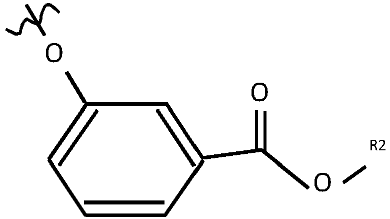
R² is not ethyl, or
(B) -(CR³R⁴)ₙ-, wherein n is an integer from 2 to 10, or
(C) represents an optionally substituted saturated or partially unsaturated cyclic ring system with 4 to 14 C atoms,
each of R³ and R⁴ is independently H or an optionally substituted straight-chain or branched C1 to C16 alkyl group or a C4 to C14 aryl group, and
n is an integer from 2 to 10
or oligomers or polymers of the curing agent.

28. Use of a curing agent according to any of claims 1 to 19 or 26 for curing a silicone rubber mass.

29. Composition comprising a curing agent according to any of claims 1 to 19 or 26 and an organosilicone compound.

30. Composition according to claim 29, **characterized in that** the organosilicone compound is an alpha,omega-dihydroxyl terminated polyorganosiloxane compound, in particular an alpha,omega-dihydroxyl terminated polydialkylsiloxane.

31. Composition obtainable by mixing at least one curing agent comprising a compound having the general structural formula R¹ₘSi(R)₄₋ₘ, wherein each R¹ and each R are defined independently of one another according to one of claims 1 to 19 and m is an integer from 0 to 2, or the curing agent is a curing agent according to claim 26, with at least one adhesive (adhesion promoter) and at least one further component selected from the group consisting of thixotropic agent, organosilicone compound, filler, colorant, plasticizer, wetting agent and catalyst.

32. Use of a composition according to any of claims 26 to 31 as a sealant, adhesive, casting mass and/or coating agent.

## Revendications

1. Durcisseur pour masses de caoutchouc de silicone, contenant un composé de formule structurelle générale R¹ₘSi(R)₄₋ₘ,
où
chaque R¹ représente indépendamment un groupe alkyle en C1 à C16 linéaire ou ramifié, éventuellement substitué, un groupe alcényle en C2 à C16 linéaire ou ramifié, éventuellement substitué, ou un groupe aryle en C4 à C14 éventuellement substitué,
m est un nombre entier de 0 à 2, où
(a) R est un radical ester d'acide hydroxycarboxylique de formule structurelle générale (II): 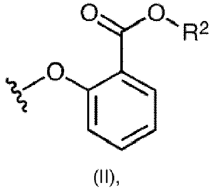 où
R² représente un groupe alkyle en C1 à C16 linéaire ou ramifié, éventuellement substitué, un groupe cycloalkyle en C4 à C14 ou un groupe aralkyle en C5 à C15,
ou des oligomères ou polymères du durcisseur, ou
(b) la formule structurelle générale est R¹ₘSi(R)₄₋ₘ 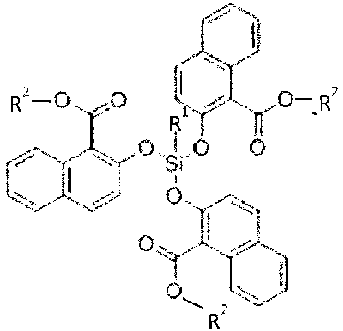 ou des oligomères ou polymères du durcisseur, dans laquelle R² est tel que défini ci-dessus, ou
(c) R est un radical ester d'acide hydroxycarboxylique de formule structurelle générale (I) : 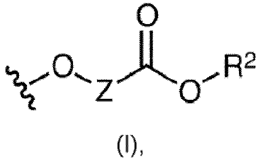 où
R² représente un groupe alkyle en C1 à C16 linéaire ou ramifié, éventuellement substitué, un groupe cycloalkyle en C4 à C14, un groupe aralkyle en C5 à C15 ou un groupe aryle en C4 à C14,
Z est -(CR³R⁴)ₙ- où n est un nombre entier de 2 à 10,
ou
Z représente un système cyclique saturé ou partiellement insaturé, éventuellement substitué, ayant 4 à 14 atomes de carbone,
chaque R³ et R⁴ représente indépendamment H ou un groupe alkyle en C1 à C16 linéaire ou ramifié, éventuellement substitué, ou un groupe aryle en C4 à C14, et
n est un nombre entier de 2 à 10
ou des oligomères ou polymères du durcisseur.

2. Durcisseur selon la revendication 1, **caractérisé en ce que** n est un nombre entier de 2 à 5.

3. Durcisseur selon l'une des revendications précédentes, **caractérisé en ce que** chaque R³ et R⁴ représente indépendamment H ou un groupe alkyle en C1 à C12 linéaire ou ramifié, éventuellement substitué, en particulier un groupe alkyle en C1 à C8 linéaire ou ramifié, éventuellement substitué.

4. Durcisseur selon l'une des revendications précédentes, **caractérisé en ce que** chaque R³ et R⁴ indépendamment est choisi dans le groupe constitué par H, le méthyle, l'éthyle, le propyle, le butyle, le n-butyle, le sec-butyle, l'iso-butyle et le tert-butyle.

5. Durcisseur selon l'une des revendications précédentes, **caractérisé en ce que** R² représente un groupe alkyle en C1 à C12 linéaire ou ramifié, éventuellement substitué, en particulier un groupe alkyle en C1 à C8 linéaire ou ramifié, éventuellement substitué, un groupe cycloalkyle en C4 à C10, un groupe aralkyle en C5 à C11 ou un groupe aryle en C4 à C10.

6. Durcisseur selon l'une des revendications précédentes, **caractérisé en ce que** R² est choisi dans le groupe constitué par le méthyle, l'éthyle, le propyle, l'isopropyle, le butyle, le n-butyle, le sec-butyle, l'isobutyle, le tert-butyle, le pentyle, le n-pentyle, le sec-pentyle, le 3- pentyle, le 2-méthylbutyle, l'isopentyle, le 3-méthylbut-2-yle, le 2-méthylbut-2-yle, le néopentyle, l'hexyle, l'heptyle, l'octyle, le nonyle, le décyle, l'undécyle, le dodécyle, l'éthylhexyle, le 2-éthylhexyle, le benzyle, le phényle, le naphtyle et le cyclohexyle.

7. Durcisseur selon l'une des revendications précédentes, **caractérisé en ce que** Z est un groupe aromatique éventuellement substitué ayant 4 à 14 atomes de carbone, le groupe aromatique n'étant pas un radical benzène.

8. Durcisseur selon la revendication 7, **caractérisé en ce que** R² représente un groupe alkyle en C1 à C12 linéaire ou ramifié, éventuellement substitué, en particulier un groupe alkyle en C1 à C8 linéaire ou ramifié, éventuellement substitué, un groupe cycloalkyle en C4 à C10 ou un groupe aralkyle en C5 à C11.

9. Durcisseur selon l'une des revendications 1 ou 8 précédentes, **caractérisé en ce que** R² est choisi dans le groupe constitué par le méthyle, l'éthyle, le propyle, l'isopropyle, le butyle, le n-butyle, le sec-butyle, l'isobutyle, le tert-butyle, le pentyle, le n-pentyle, le sec-pentyle, le 3- pentyle, le 2-méthylbutyle, l'isopentyle, le 3-méthylbut-2-yle, le 2-méthylbut-2-yle, le néopentyle, l'hexyle, l'heptyle, l'octyle, le nonyle, le décyle, l'undécyle, le dodécyle, l'éthylhexyle, le 2-éthylhexyle, le benzyle, le phényle, le naphtyle et le cyclohexyle.

10. Durcisseur selon l'une des revendications 1 à 9 précédentes, **caractérisé en ce que** R² est choisi dans le groupe constitué par le méthyle, l'éthyle, l'isopropyle, le n-butyle et le 2-éthylhexyle, en particulier dans le groupe constitué par l'éthyle et le 2-éthylhexyle.

11. Durcisseur selon l'une des revendications précédentes, **caractérisé en ce que** chaque R¹ représente indépendamment un groupe alkyle en C1 à C12 linéaire ou ramifié, éventuellement substitué, en particulier un groupe alkyle en C1 à C8 linéaire ou ramifié, éventuellement substitué, ou un groupe alcényle en C2 à C12 linéaire ou ramifié, éventuellement substitué, en particulier un groupe alcényle en C2 à C8 linéaire ou ramifié, éventuellement substitué, ou un groupe aryle en C4 à C10 éventuellement substitué.

12. Durcisseur selon l'une des revendications précédentes, **caractérisé en ce que** chaque R¹ représente indépendamment un méthyle, un éthyle, un propyle, un vinyle, un phényle ou un allyle.

13. Durcisseur selon la revendication 1, **caractérisé en ce que** R² représente un groupe alkyle en C1 à C12 linéaire ou ramifié, éventuellement substitué, en particulier un groupe alkyle en C1 à C8 linéaire ou ramifié, éventuellement substitué, un groupe cycloalkyle en C4 à C10, un groupe aryle en C5 à C10 ou un groupe aralkyle en C5 à C11.

14. Durcisseur selon l'une des revendications 1 ou 13 précédentes, **caractérisé en ce que** R² est choisi dans le groupe constitué par le méthyle, l'éthyle, le propyle, l'isopropyle, le butyle, le n-butyle, le sec-butyle, l'isobutyle, le tert-butyle, le pentyle, le n-pentyle, le sec-pentyle, le 3- pentyle, le 2-méthylbutyle, l'isopentyle, le 3-méthylbut-2-yle, le 2-méthylbut-2-yle, le néopentyle, l'hexyle, l'heptyle, l'octyle, le nonyle, le décyle, l'undécyle, le dodécyle, l'éthylhexyle, le 2-éthylhexyle, le benzyle, le phényle, le naphtyle et le cyclohexyle.

15. Durcisseur selon l'une des revendications précédentes, **caractérisé en ce que** la formule structurelle générale est R¹ₘSi(R)₄₋ₘ, 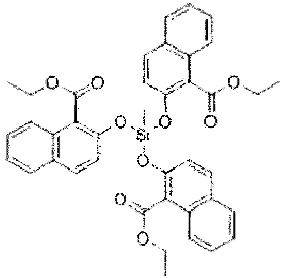 ou des oligomères ou polymères du durcisseur.

16. Durcisseur pour masses de caoutchouc de silicone selon la revendication 1, contenant au moins un composé choisi dans le groupe constitué par le tris(2-éthylhexylsalicylato)éthylsilane, le tris(2-éthylhexylsalicylato)méthylsilane, le tris(2-éthylhexylsalicylato)phénylsilane, le tris(2-éthylhexylsalicylato)propylsilane, le tris(2-éthylhexylsalicylato)vinylsilane, le tris(éthylhexylsalicylato)éthylsilane, le tris(éthylhexylsalicylato)méthylsilane, le tris(éthylhexylsalicylato)phénylsilane, le tris(éthylhexylsalicylato)propylsilane, le tris(éthylhexylsalicylato)vinylsilane, le tris(éthylsalicylato)éthylsilane, le tris(éthylsalicylato)méthylsilane, le tris(éthylsalicylato)phénylsilane, le tris(éthylsalicylato)propylsilane, le tris(éthylsalicylato)vinylsilane, le tris(isopropylsalicylato)éthylsilane, le tris(isopropylsalicylato)phénylsilane, le tris(isopropylsalicylato)propylsilane, le tris(isopropylsalicylato)vinylsilane, le tris(méthylsalicylato)éthylsilane, le tris(méthylsalicylato)méthylsilane, le tris(méthylsalicylato)phénylsilane, le tris(méthylsalicylato)vinylsilane, le tétra(2-éthylhexylsalicylato)silane, le tétra(éthylhexylsalicylato)silane, le tétra(éthylsalicylato)silane, le tétra(isopropylsalicylato)silane, le tétra(méthylsalicylato)silane ou des oligomères ou polymères du durcisseur ou leurs mélanges.

17. Durcisseur pour masses de caoutchouc de silicone selon la revendication 1, contenant un composé de formule structurelle : 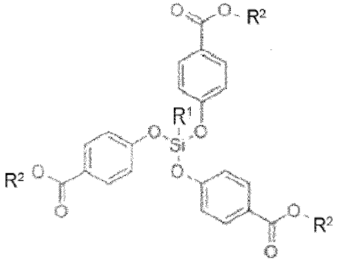
où R¹ est un vinyle et R² est un éthylhexyle,
ou des oligomères ou polymères du durcisseur.

18. Durcisseur pour masses de caoutchouc de silicone selon la revendication 1, contenant un composé de formule structurelle générale R¹ₘSi(R)₄₋ₘ,
où
chaque R¹ représente indépendamment un groupe alkyle en C1 à C16 linéaire ou ramifié, éventuellement substitué, un groupe alcényle en C2 à C16 linéaire ou ramifié, éventuellement substitué, ou un groupe aryle en C4 à C14 éventuellement substitué,
m est un nombre entier de 0 à 2,
R est un radical ester d'acide hydroxycarboxylique de formule structurelle générale (I) : 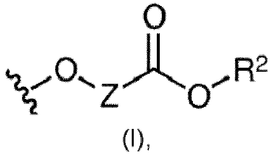 où
R² représente un groupe alkyle en C1 à C16 linéaire ou ramifié éventuellement substitué, un groupe cycloalkyle en C4 à C14, un groupe aralkyle en C4 à C14, un groupe aralkyle en C5 à C15 ou un groupe aryle en C4 à C14,
Z représente un groupe aromatique éventuellement substitué ayant 4 à 14 atomes de carbone ou -(CR³R⁴)ₙ- ou un système cyclique saturé ou partiellement insaturé, éventuellement substitué, ayant 4 à 14 atomes de carbone,
chaque R³ et R⁴ représente indépendamment H ou un groupe alkyle en C1 à C16 linéaire ou ramifié, éventuellement substitué, ou un groupe aryle en C4 à C14, et
n est un nombre entier de 1 à 10,
ou des oligomères ou polymères du durcisseur,
où,
lorsque n est égal à 1, R³ et R⁴ ne représentent pas H, R³ ne représente pas H et R⁴ pas un méthyle et R³ ne représente pas un méthyle et R⁴ pas H,
**caractérisé en ce que** le durcisseur contient en outre un composé de formule générale R⁵OSi(R)₄₋ₒ, où R⁵ est un groupe alkyle en C1 à C16 linéaire ou ramifié, éventuellement substitué, en particulier un groupe alkyle en C1 à C12 linéaire ou ramifié, éventuellement substitué, ou un groupe alkyle en C1 à C8 ou un groupe méthyle ou propyle, ou un groupe alcényle en C2 à C16 linéaire ou ramifié, éventuellement substitué, en particulier un groupe alcényle en C2 à C12 ou en C2 à C8 linéaire ou ramifié, éventuellement substitué, ou un groupe vinyle ou un groupe aryle en C4 à C14 éventuellement substitué ou un groupe phényle, et R est défini selon l'une des revendications 1 à 17 et o est un nombre entier de 0 à 2, et où R¹ₘSi(R)₄₋ₘ et R⁵ₒSi(R)₄₋ₒ ne peuvent pas être identiques.

19. Durcisseur pouvant être obtenu en mélangeant au moins un composé de formule structurelle générale R¹ₘSi(R)₄₋ₘ selon la revendication 18 avec un composé de formule structurelle générale R⁵ₒSi(R)₄₋ₒ, où chaque R¹ et chaque R⁵ sont indépendamment définis selon l'une des revendications 1, 11, 12, 15, 16, 17 ou 18 et chaque R est indépendamment défini selon l'une des revendications 1, 3, 4, 5, 6, 7, 8, 9, 10, 13, 14, 15, 16, 17 ou 18 et m et o sont indépendamment un nombre entier de 0 à 2 et où R¹ₘSi(R)₄₋ₘ et R⁵ₒSi(R)₄₋ₒ ne peuvent pas être identiques.

20. Procédé de préparation d'un durcisseur selon l'une des revendications 1 à 19, qui comprend la réaction d'un composé de formule générale R¹ₘSi(R)₄₋ₘ avec (4-m) équivalents d'au moins un ester d'acide hydroxycarboxylique de formule structurelle générale (III), 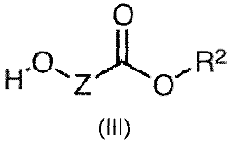 où
chaque R¹ représente indépendamment un groupe alkyle en C1 à C16 linéaire ou ramifié, éventuellement substitué, un groupe alcényle en C2 à C16 linéaire ou ramifié, éventuellement substitué, ou un groupe aryle en C4 à C14 éventuellement substitué,
m est un nombre entier de 0 à 2,
X est choisi dans le groupe constitué par un radical alcoxy ayant au moins un atome de carbone et un atome d'halogène, en particulier un atome de chlore,
R² représente un groupe alkyle en C1 à C16 linéaire ou ramifié, éventuellement substitué, un groupe cycloalkyle en C4 à C14, un groupe aralkyle en C5 à C15 ou un groupe aryle en C4 à C14,
Z représente un groupe aromatique éventuellement substitué ayant 4 à 14 atomes de carbone ou -(CR³R⁴)ₙ- ou un système cyclique saturé ou partiellement insaturé ayant 4 à 14 atomes de carbone,
chaque R³ et R⁴ représente indépendamment H ou un groupe alkyle en C1 à C16 linéaire ou ramifié, éventuellement substitué, ou un groupe aryle en C4 à C14, et n est un nombre entier de 2 à 10, en particulier de 2 à 5.

21. Procédé selon la revendication 20, **caractérisé en ce que** chaque R¹ représente indépendamment un groupe alkyle en C1 à C12 linéaire ou ramifié, éventuellement substitué, en particulier un groupe alkyle en C1 à C8 linéaire ou ramifié, éventuellement substitué, ou un groupe alcényle en C2 à C12 linéaire ou ramifié, éventuellement substitué, en particulier un groupe alcényle en C1 à C8 linéaire ou ramifié, éventuellement substitué, ou un groupe aryle en C4 à C10 éventuellement substitué.

22. Procédé selon l'une des revendications 20 ou 21, **caractérisé en ce que** chaque R³ et R⁴ représente indépendamment H ou un groupe alkyle en C1 à C12 linéaire ou ramifié, éventuellement substitué, en particulier un groupe alkyle en C1 à C8 linéaire ou ramifié, éventuellement substitué.

23. Procédé selon l'une des revendications 20 à 22, **caractérisé en ce que** R² est un groupe alkyle en C1 à C12 linéaire ou ramifié, éventuellement substitué, en particulier un groupe alkyle en C1 à C8 linéaire ou ramifié, éventuellement substitué, un groupe cyclohexyle en C4 à C10, un groupe aralkyle en C5 à C11 ou un groupe aryle en C4 à C10.

24. Procédé selon l'une des revendications 20 à 23, **caractérisé en ce que** chaque R¹ représente indépendamment un méthyle, un éthyle, un propyle, un vinyle, un phényle ou un allyle et/ou l'ester d'acide hydroxycarboxylique est **caractérisé par** une ou plusieurs caractéristiques des revendications 2 à 10.

25. Procédé selon l'une des revendications 20 à 24, **caractérisé en ce que** Z est un groupe aromatique éventuellement substitué ayant 6 atomes de carbone, en particulier un radical benzène divalent.

26. Durcisseur pouvant être obtenu par un procédé selon l'une des revendications 20 à 25, dans lequel, lorsque Z est un cycle benzénique, Z est un radical ester d'acide hydroxycarboxylique de formule structurelle générale (II) et R² n'est pas un groupe aryle en C4 à C14.

27. Utilisation d'un durcisseur pour des masses de caoutchouc de silicone, dans laquelle le durcisseur contient un composé de formule structurelle générale R₁ₘSi(R)₄₋ₘ,
où
chaque R¹ représente indépendamment un groupe alkyle en C1 à C16 linéaire ou ramifié, éventuellement substitué, un groupe alcényle en C2 à C16 linéaire ou ramifié, éventuellement substitué, ou un groupe aryle en C4 à C14 éventuellement substitué,
m est un nombre entier de 0 à 2,
R est un radical ester d'acide hydroxycarboxylique de formule structurelle générale (I) : 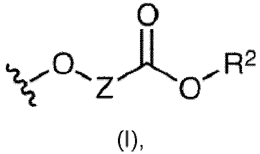 où
R² représente un groupe alkyle en C1 à C16 linéaire ou ramifié, éventuellement substitué, un groupe cycloalkyle en C4 à C14, un groupe aralkyle en C5 à C15 ou un groupe aryle en C4 à C14,
Z représente
(A) un groupe aromatique éventuellement substitué ayant 4 à 14 atomes de carbone,
où,
lorsque m = 2, m = 1 ou m = 0, le groupe aryle en C6 ne représente pas 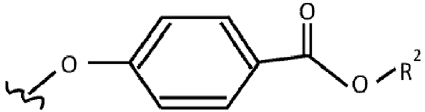 et lorsque m = 2 ou m = 0 et le groupe aryle en C6 est 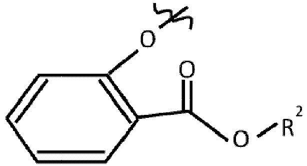 R² ne représente pas un phényle ;
et lorsque le groupe aryle en C6 est 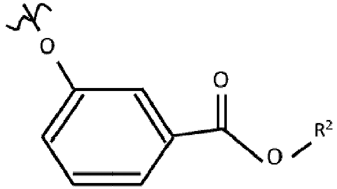
R² ne représente pas un éthyle, ou
(B) -(CR³R⁴)ₙ-, où n est un nombre entier de 2 à 10, ou
(C) un système cyclique saturé ou partiellement insaturé, éventuellement substitué, ayant 4 à 14 atomes de carbone,
chaque R³ et R⁴ représente indépendamment H ou un groupe alkyle en C1 à C16 linéaire ou ramifié, éventuellement substitué, ou un groupe aryle en C4 à C14, et
n est un nombre entier de 2 à 10,
ou des oligomères ou polymères du durcisseur.

28. Utilisation d'un durcisseur selon l'une des revendications 1 à 19 ou 26 pour durcir une masse de caoutchouc de silicone.

29. Composition contenant un durcisseur selon l'une des revendications 1 à 19 ou 26 et un composé organosilicié.

30. Composition selon la revendication 29, **caractérisée en ce que** le composé organosilicié est un composé polyorganosiloxane à terminaison alpha,oméga-dihydroxyle, en particulier un polydialkylsiloxane à terminaison alpha,oméga-dihydroxyle.

31. Composition pouvant être obtenue par mélange d'au moins un durcisseur contenant un composé de formule structurelle générale R¹ₘSi(R)₄₋ₘ, où chaque R¹ et chaque R sont indépendamment définis selon l'une des revendications 1 à 19 et m est un nombre entier de 0 à 2 ou le durcisseur est un durcisseur selon la revendication 26, avec au moins un adhésif (promoteur d'adhérence) et au moins un autre composant choisi dans le groupe constitué par un agent thixotrope, un composé organosilicié, une matière de charge, un colorant, un plastifiant, un agent mouillant et un catalyseur.

32. Utilisation d'une composition selon l'une des revendications 26 à 31 comme moyen d'étanchéité, adhésif, masse de scellement et/ou moyen de revêtement.
